(19) Europäisches Patentamt / European Patent Office / Office européen des brevets

(11) **EP 4 261 738 B1**

(12) **EUROPEAN PATENT SPECIFICATION**

(45) Date of publication and mention
of the grant of the patent:
**08.01.2025  Bulletin 2025/02**

(21) Application number: **22168460.8**

(22) Date of filing: **14.04.2022**

(51) International Patent Classification (IPC):
**G06V 20/56** (2022.01)    **G06V 10/62** (2022.01)
**G06V 10/764** (2022.01)    **G06F 18/2415** (2023.01)

(52) Cooperative Patent Classification (CPC):
**G06V 20/588; G06F 18/24155; G06V 10/62;**
**G06V 10/764**

(54) **MULTI-TARGET LANE TRACKING**

MEHRZIELSPURVERFOLGUNG

SUIVI DE VOIES MULTI-CIBLES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.10.2023  Bulletin 2023/42**

(73) Proprietor: **Zenseact AB**
**417 56 Göteborg (SE)**

(72) Inventors:
• **FRÖHLE, Marcus**
  **421 35 Västra Frölunda (SE)**
• **ÖSTMAN, Johan**
  **416 58 Göteborg (SE)**
• **HUANG, Binru**
  **417 55 Göteborg (SE)**

(74) Representative: **Zacco Sweden AB**
**P.O. Box 5581**
**Löjtnantsgatan 21**
**114 85 Stockholm (SE)**

(56) References cited:
• **ZHAO KUN ET AL: "A novel multi-hypothesis tracking framework for lane recognition", 17TH INTERNATIONAL CONFERENCE ON INFORMATION FUSION (FUSION), INTERNATIONAL SOCIETY OF INFORMATION FUSION, 7 July 2014 (2014-07-07), pages 1 - 8, XP032653735**
• **TOPFER DANIEL ET AL: "Efficient Road Scene Understanding for Intelligent Vehicles Using Compositional Hierarchical Models", IEEE TRANSACTIONS ON INTELLIGENT TRANSPORTATION SYSTEMS, IEEE, PISCATAWAY, NJ, USA, vol. 16, no. 1, 1 February 2015 (2015-02-01), pages 441 - 451, XP011571780, ISSN: 1524-9050, [retrieved on 20150130], DOI: 10.1109/TITS.2014.2354243**
• **HEIDENREICH TONI ET AL: "LaneSLAM -- Simultaneous Pose and Lane Estimation Using Maps with Lane-Level Accuracy", 2015 IEEE 18TH INTERNATIONAL CONFERENCE ON INTELLIGENT TRANSPORTATION SYSTEMS, IEEE, 15 September 2015 (2015-09-15), pages 2512 - 2517, XP032804363, DOI: 10.1109/ITSC.2015.404**

## Description

TECHNICAL FIELD

The present invention relates to tracking of lane markers by road vehicles such as cars, busses, and trucks. More specifically, various embodiments of the present invention relate to systems and methods for determining a representation of one or more lane-marker tracks, each comprising a plurality of lane markers, and extending along a road portion.

BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

In a not too distant future, ADS solutions are expected to have found their way into a majority of the new vehicles being put on the market. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

Modern driver support systems used in ADAS and AD, e.g. lane departure warning (LDW), lane-keeping assist (LKA), pilot assist, and path planning usually rely on lane marker information. Such information should be accurately expressed via a geometric description relative the vehicle. Furthermore, the lane marker information should be robust against sensor imperfections and environmental factors such as fog or rain.

A perception module/system comprising one or more sensors provides 3D-detections of lane markers in the vehicle frame. Due to sensor imperfections, detections may originate from either lane markers, clutter, noise, etc. Thus, such factors are to be taken into account when providing the lane marker information to the ADS.

Accordingly, for comfort and safety reasons, there is a need for solutions in the art that are capable of providing accurate geometrical representations of lane markers extending along a road portion in a robust and reliable manner.

An example of prior art which addresses some of the above issues is Zhao Kun et al.: "A novel multi-hypothesis tracking framework for lane recognition", 17TH International Conference on Information Fusion (FUSION), International Society of Information Fusion, 7 July 2014 (2014-07-07), pages 1-8.

SUMMARY

It is therefore an object of the present invention to provide a control system, a vehicle comprising such a control system, a method, a computer-readable storage medium and a computer program product, which alleviate all or at least some of the drawbacks of presently known solutions.

More specifically, it is an object of the present invention to alleviate problems related to vehicles comprising ADS features in terms of geometrical representation of lane markers present on a road portion on which the vehicle will be travelling.

These objects are achieved by means of a control system, a vehicle comprising such a control system, a method, a computer-readable storage medium as defined in the appended claims. The term exemplary is in the present context to be understood as serving as an instance, example or illustration.

In the context of the present invention a vehicle being subjected to the methods and systems of the present invention may be referred to as an ego-vehicle, whereas other vehicles may be referred to as external vehicles in relation to the ego-vehicle.

According to a first aspect of the present invention, there is provided a method for determining a representation of one or more lane-marker tracks extending along a road portion, each lane-marker track comprising a plurality of lane markers. The method comprises obtaining, by means of a motion model, a state of an ego vehicle traveling on the road portion and obtaining one or more sensor detection clusters from a perception module of the ego vehicle, each sensor detection cluster comprising detections of a subset of lane markers of the plurality of lane markers comprised in each lane-marker track. The method further comprises predicting, based on the obtained state of the ego vehicle and previously formed one or more lane-marker tracks, a geometrical representation of the one or more lane-marker tracks. Even further, the method comprises determining a confidence value for each predicted lane-marker track, wherein the confidence value for a given predicted lane-marker track comprises a first confidence value or a second confidence value and creating one or more hypotheses for each predicted lane-marker track having the first confidence value as well as creating one or more cluster-track pairs for each predicted lane-marker track having the second confidence value. The method comprises performing a closed-form association weight calculation for each hypothesis and each cluster-track pair created for each of the predicted lane-marker tracks having the first and the second confidence values respectively. For each predicted lane-marker track having the second confidence value the method comprises creating a new lane-marker track having the first confidence value by combining the one or more cluster-track pairs using the calculated association weights of the one or more cluster-track pairs, creating a new-track hypothesis for the new lane-marker track and calculating an association weight for the new-track hypothesis created for the new lane-marker track. For all lane-marker tracks comprising the predicted lane-marker tracks and the new lane-marker tracks having the first confidence value, the method comprises determining a joint association probability value for each hypothesis-track combination based on the calculated association weight of that hypothesis created for its corresponding lane-marker track, the determined joint association probability value for each hypothesis-track combination being indicative of a probability of that hypothesis belonging to that specific lane-marker track. The method further comprises selecting one or more created hypotheses whose hypothesis-track combination joint association probabilities exceed a joint probability threshold value and updating each lane-marker track with each of the selected one or more hypotheses of that lane-marker track to create one or more updated state(s) of that lane-marker track. The method further comprises combining all updated states of each lane-marker track to obtain a single-hypothesis state of that lane-marker track and assigning the single-hypothesis state of each lane-marker track to that lane-marker track in order to determine the representation of each lane-marker track extending along the road portion.

In some embodiments, for a given predicted lane-marker track the method may further comprise determining for each detection comprised in each detection cluster, if a likelihood of that detection exceeds a predetermined gate threshold value, that the detection is an acceptable detection for the given predicted lane-marker track.

According to several aspects and embodiments the motion model may be based on any one of ego vehicle data and a random walk process model indicative of a state of the ego vehicle on the road portion.

Thus, in several aspects and embodiments, the motion model is based on the ego vehicle data indicative of a state of the ego vehicle on the road portion, wherein the ego vehicle data may comprise any one of a velocity and heading of the ego vehicle.

In some aspects and embodiments, the motion model is based on the random walk process model indicative of a state of the ego vehicle on the road portion. Accordingly, in scenarios and circumstances wherein the ego vehicle data is not immediately available, a previous state the motion model, calculated based on previously obtained ego vehicle data, is used to obtain the present state of the vehicle on the road portion. By way of example, a dead reckoning process may be used to obtain the current state of the vehicle by using the previously determined state of the vehicle on the road portion. Further details of the calculations and estimations by means of random walk and dead reckoning process are assumed to already be available to the person skilled in the art.

In various embodiments, the one or more hypothesis created for a given predicted lane-marker track having the first confidence value may comprise any one of a miss-detection hypothesis, a hypothesis for each detection cluster, and a hypothesis for each of at least one combination of the one or more detection clusters.

In several embodiments, determining the representation of each lane-marker track extending along the road portion may comprise forming the representation of each lane-marker track by assigning the single-hypothesis state of each lane-marker track to that lane-marker track.

In some exemplary embodiments, updating each lane-marker track with each of the selected one or more hypotheses of that lane-marker track to create one or more updated state(s) of that lane-marker track may comprise updating each predicted lane-marker track having the first confidence value with each of the one or more selected hypotheses of that predicted lane-marker track and updating each new lane-marker track having the first confidence value created based on the predicted lane-marker tracks having the second confidence value with the new-track hypothesis of that new lane-marker track. The method may further comprise updating at least one parameter of a Gaussian random vector, representing that predicted lane-marker track with the one or more sensor detection clusters comprised in each selected hypothesis of that lane-marker track and updating at least one parameter of a Gaussian random vector, representing that new lane-marker track with the sensor detection cluster comprised in that new-track hypothesis respectively, wherein the Gaussian random vector may be parameterized by a vector such as a mean vector and a matrix such as a covariance matrix.

In the present context by parametrizing or updating at least one parameter of the Gaussian random vector it is to be understood that an underlying distribution of the random vector is parametrized on the mean and covariance.

The present inventors thus have realized that the proposed solution provides a noticeable improvement in terms of the computational complexity and memory cost compared to the existing solutions. That is since the update of each of the hypotheses is performed only after the hypothesis association probability calculation and only for the selected few hypotheses having a probability exceeding the threshold value and not together with the hypothesis weight calculation for all of the created hypotheses. Thus, the computational efficiency of the proposed solution is advantageously improved.

In further embodiments of the present invention, calculation of the association weight of each hypothesis for a combination of the one or more detection clusters may comprise calculating the association weight by combining the calculated association weights of hypotheses for each single detection cluster comprised in the at least one combination of the one or more detection clusters.

In yet another embodiment, the method may further comprise assigning a lane label to each predicted lane-marker track with determined representation, wherein the assigned label is indicative of a spatial position of the lane-marker track with respect to the ego vehicle.

According to a second aspect of the present invention there is provided a (non-transitory) computer-readable storage medium storing one or more programs configured to be executed by one or more processors of a processing system, the one or more programs comprising instructions for performing the method according to any one of the embodiments of the method of the present invention.

According to a third aspect of the present invention, there is provided a computer program product comprising instructions which, when the program is executed by one or more processors of a processing system, causes the processing system to carry out the method according to any one of the embodiments of the method disclosed herein.

According to a further fourth aspect of the present invention, there is provided a system for determining a representation of one or more lane-markertracks extending along a road portion, each lane-marker track comprising a plurality of lane markers, the system comprising control circuitry configured to obtain, by means of a motion model, a state of an ego vehicle traveling on the road portion and obtain one or more sensor detection clusters from a perception module of the ego vehicle, each sensor detection cluster comprising detections of a subset of lane markers of the plurality of lane markers comprised in each lane-marker track. The control circuitry further configured to predict, based on the obtained state of the ego vehicle and previously formed one or more lane-marker tracks, a geometrical representation of the one or more lane-marker tracks. Even further, configured to determine a confidence value for each predicted lane-marker track, wherein the confidence value for a given predicted lane-marker track comprises a first confidence value or a second confidence value and create one or more hypotheses for each predicted lane-marker track having the first confidence value as well as create one or more cluster-track pairs for each predicted lane-marker track having the second confidence value. The control circuitry further configured to perform a closed-form association weight calculation for each hypothesis and each cluster-track pair created for each of the predicted lane-marker tracks having the first and the second confidence values respectively. For each predicted lane-marker track having the second confidence value the control circuitry further configured to create a new lane-marker track having the first confidence value by combining the one or more cluster-track pairs using the calculated association weights of the one or more cluster-track pairs, create a new-track hypothesis for the new lane-marker track and calculate an association weight for the new-track hypothesis created for the new lane-marker track. For all lane-marker tracks comprising the predicted lane-marker tracks and the new lane-marker tracks having the first confidence value, the control circuitry is further configured to determine a joint association probability value for each hypothesis-track combination based on the calculated association weight of that hypothesis created for its corresponding lane-marker track, the determined joint association probability value for each hypothesis-track combination being indicative of a probability of that hypothesis belonging to that specific lane-marker track. The control circuitry further configured to select one or more created hypotheses whose hypothesis-track combination joint association probabilities exceed a joint probability threshold value and update each lane-marker track with each of the selected one or more hypotheses of that lane-marker track to create one or more updated state(s) of that lane-marker track. The control circuitry further configured to combine all updated states of each lane-marker track to obtain a single-hypothesis state of that lane-marker track and assign the single-hypothesis state of each lane-marker track to that lane-marker track in order to determine the representation of each lane-marker track extending along the road portion.

According to yet another fifth aspect of the present invention, there is provided a vehicle comprising an automated Driving System, ADS, a perception module comprising one or more on-board sensors for monitoring a surrounding environment of the vehicle, and a system according to any one of the embodiments of the system of the fourth aspect of the present invention.

Further embodiments of the different aspects are defined in the dependent claims.

It is to be noted that all the embodiments, elements, features and advantages associated with the first aspect also analogously apply to the second, third, fourth and the fifth aspects of the present invention.

These and other features and advantages of the present invention will in the following be further clarified in the following detailed description.

BRIEF DESCRIPTION OF THE DRAWINGS

Further objects, features and advantages of embodiments of the disclosure will appear from the following detailed description, reference being made to the accompanying drawings. The drawings are not to scale.

Figs. 1a-1b are schematic perspective top view illustrations of a vehicle comprising a control system and travelling on a road portion in accordance with several embodiments of the present invention.

Fig. 2 is a schematic block diagram illustrating a lane tracker architecture according to several embodiments of the present invention.

Fig. 3 is a schematic perspective top view illustration of the vehicle comprising the control system and a table in accordance with several other embodiments of the present invention.

Figs. 4a-b are schematic flowcharts illustrating a method in accordance with several embodiments of the present invention.

Figs. 5a-d are schematic illustrations of a vehicle according to some embodiments of the present invention.

Fig. 6 is a schematic side view illustration of the vehicle comprising the control system in accordance with an embodiment of the present invention.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

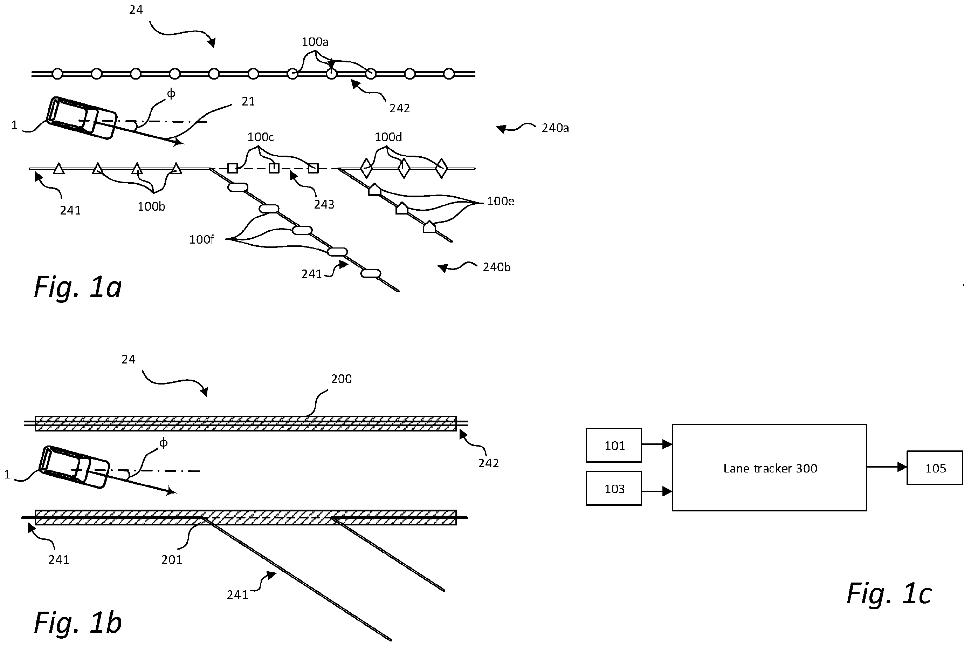

Fig. 1a and Fig. 1b illustrate schematic perspective top views of a vehicle 1. The vehicle 1 may also be referred to as the ego-vehicle. The vehicle 1 comprises a control system 10 which comprises control circuitry configured to obtain data comprising information about the surrounding environment of the vehicle 1 e.g. from a perception module 6 of the ego vehicle 1. Fig. 1a shows the ego vehicle 1 travelling on a portion or segment 24 of a road in the illustrated direction by the arrow 21. In several examples and embodiments the road may be any type of road e.g. a highway with carriageways, a motorway, freeway or expressway. The road may also be a country road or any other carriageway with one or more lanes wherein the vehicle 1 will be travelling on. The road portion 24 comprises a plurality of lane markers 241-243. The lane markers 241-243 may have a variety of geometries, shapes, types (e.g. solid, dashed, double marker, etc.) and extend along the road portion, or be located anywhere on the road portion such as in junctions or road intersections, exits, etc. The lane markers are arranged to define and mark the one or more lanes extending along the road portion 24. In the example of Figs. 1a-b, the road portion comprises only one main lane 240a adjoining an exit lane 240b solely for the convenience of the reader and to explain various aspects and embodiments. It is clear to the person skilled in the art that there can be scenarios with as many appropriate lanes and vehicles on the road wherein the methods and systems of the present invention are readily applicable.

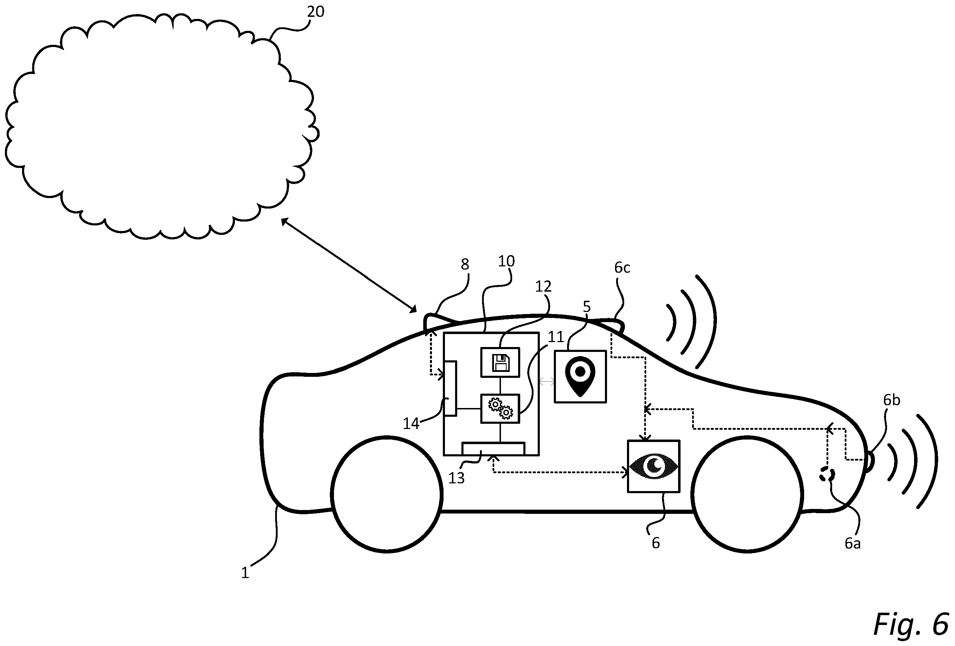

In addition to vehicle 1, there may be other external vehicle (not shown) travelling on the road portion 24. The ego vehicle 1 comprises sensing capabilities e.g. at least one on-board sensor device which may be a part of a vehicle perception system or module 6 comprising sensor devices 6a-6c such as the ones shown in the vehicle of Fig. 6.

The ego vehicle 1 may be provided with a driver support function, which in the present context may be understood as an Autonomous Driving (AD) feature or an Advanced Driver Assistance Feature (ADAS), both of which are herein encompassed under the term an Automated Driving System (ADS), or an ADS feature. The ego-vehicle 1 may also be provided with means for wireless communication compatible with various short-range or long-range wireless communication protocols as further explained with reference to Fig. 6. The ego-vehicle 1 may be any type of vehicle such as cars, motorcycles, cargo trucks, busses, smart bicycles, autonomous driving delivery vehicles, etc.

As mentioned earlier, the ADS systems usually rely on lane marker information. Such information should be accurately expressed via a geometric description of the lane markers relative to the ego vehicle. Furthermore, the lane marker information should be robust against sensor imperfections and environmental factors such as fog or rain. The ADS feature may e.g. control one or more of acceleration, steering, and braking of the vehicle.

Thus, in order to facilitate providing the most accurate and robust lane marker information to the ADS system of ego vehicle 1, the present inventors present an advantageous multi-lane tracker 300 which is configured to provide a geometric description of the lane markers of the road portion by identifying and tracking the lane markers of the road portion in lane-marker tracks such as tracks 200, 201. The lane tracker 300 is configured to obtain, by means of a motion model, a state of the ego vehicle on the road portion 24 as input together with sensor detections of the lane markers acquired by the ego vehicle. By utilizing the obtained sensor detections of the lane markers acquired by the ego vehicle 1 and the state of the ego vehicle on the road portion 24, the lane tracker 300 accurately and efficiently determines the geometrical representations of the lane-marker tracks. In various embodiments and aspects of the present invention, the lane tracker 300 may be implemented by the control system 10 of the ego vehicle 1.

The perception module 6 of the ego-vehicle 1 of the present invention is thus configured to provide the detections of the sensor systems 6a-6c to the control circuitry 10 in groups of detection clusters such as detection clusters 100a-f in the example of Fig. 1a. To this end, the sensor detections of the lane markers 241-243 of the road portion 24 acquired by the sensor systems 6a-6c of the ego vehicle 1 can be grouped into detection clusters based on e.g. spatial distance and/or type or any other suitable attributes of the lane markers 241-243.

In several embodiments the motion model may be based on any one of ego vehicle data which may comprise any one of a velocity and heading of the ego vehicle.

In some embodiments, the motion model may be based on a random walk process model indicative of a state of the ego vehicle on the road portion. For instance, dead reckoning processes may be used for determining the present location of the vehicle by advancing some previous position through known heading and velocity information of the vehicle over a given length of time.

By consuming the provided detection clusters 100a-f and the state of the ego vehicle determined based on the ego vehicle data such as velocity and heading in a process model and/or by using a random walk process model, the control system 10 of the ego vehicle 1 is configured to provide a multi-target lane tracker 300 which is capable of distinguishing between detections originating from lane markers as opposed to noise and clutter. Several detection clusters may contain arbitrary number of sensor detections amongst which there could be redundant detections from the same lane markers due to, e.g. blockage from other external vehicles, clutter, noise, etc. The multi-target lane tracker 300 is capable of locating and using detection clusters stemming from the same lane markers in the estimation of lane marker tracks 200-201, thus eliminating redundancy. Note that the process of acquiring 3D lane-marker detections in the ego vehicle coordinate frame and grouping those detections in detection clusters is not described herein in extensive detail so as not to obscure the proposed solution.

Further, the lane tracker of the present invention enables a computationally efficient model for estimation and determination of the geometrical representation (which may also be referred to as lane-marker track description throughout this text) of lane-marker tracks which is to be executed alongside other features in the ego vehicle 1. Furthermore, the produced lane-marker track descriptions extend as far as possible in longitude i.e. along the road portion 24, account for lane marker attributes, e.g., color, type, and width, and are associated with a confidence measure making the determination reliable and robust.

Accordingly, the lane tracker 300 of the ego vehicle 1 is configured to obtain, by means of the motion model, the state 101 of an ego vehicle traveling on the road portion and the lane marker detection clusters 103 as input and in turn determine the geometrical description of the lane-marker tracks as well as additional properties of the lane markers such as range, width, color, type, ID, confidence, etc. as output 105.

In various embodiments, the lane tracker 300 as shown in Fig. 1c may receive the detection clusters 103 of lane-marker sensor detections at different rates e.g. at a rate of 15 Hz and the ego vehicle data e.g. velocity and heading at another rate e.g. at a rate of 40 Hz. The heading in some embodiments may be represented by or derived from a yaw of the vehicle ($\phi$), or a yaw rate of the vehicle. However, in some embodiments, the heading can be defined by a roll, pitch, and yaw of the vehicle.

The desired outputs 105 of the lane tracker 300 are for instance polynomial representations of each estimated lane-marker track 200, 201 (represented by the polynomial coefficients). An example input for the lane marking detections and the desired output in terms of lane-marker tracks 200-201 is illustrated in Figs. 1a-b. In Fig. 1a, there are six detection clusters 100a-f provided as an input 103 to the lane tracker 300. Each detection cluster contains an arbitrary number of sensor detections of the lane markers 241-243 of the road portion 24. The ego-vehicle data such as velocity and heading is also provided as input 101 to the tracker 300. The desired outputs are the two lane-marker tracks 200, 201 in Fig. 1b represented by the coefficients of two polynomials whose ranges are the estimated starting and end distance of each polynomial. The parameters of the polynomial may be dependent on several factors such as lateral offset to lane markers from the ego vehicle, angles between the ego vehicle and the lane markers, road curvature at the ego vehicle, road curvature rate and the like.

The spatial state of a lane-marker track, i.e. the polynomial coefficients, is modelled as a Gaussian random vector. As such, the distribution of the Gaussian random vector is parametrized by a vector and a matrix which in the context of the present solution is a mean vector and a covariance matrix of the Gaussian random vector. This model allows for a relatively simple, yet robust and accurate updates of the geometrical representation e.g. polynomial coefficients by the detection clusters.

In various aspects and embodiments, the predictions and measurement updates of the polynomial coefficients may be performed by the control system 10 by using linear or non-linear filtering e.g. by using a Bayesian filter or a combination of multiple Bayesian filters. In several aspects and embodiments, each Bayesian filter may be one of a linear Kalman Filter, Extended Kalman Filter (EKF), Unscented Kalman Filter (UKF), Cubature Kalman Filter (CKF).

In general, the lane-marker tracks which are tracked by the control system 10 of the ego vehicle 1 are divided in two categories of confidence values, namely first confidence values and the second confidence values. The first confidence value may also be referred to as "high" confidence value in this description. The second confidence value may be referred to as "low" confidence value.

As mentioned earlier, since sensor detections are susceptible to false alarm detections, due to noise, clutter etc. a random finite set (RFS) approach may be applied where each lane-marker track having a high confidence value may be modelled by a Bernoulli RFS as known in the art. The Bernoulli RFS is then used to model the realization of two potential outcomes by e.g. using a probability mass function to assess the existence or the non-existence of a lane marker in the lane-marker track. The result of the Bernoulli RFS is the existence probability of the lane markers in the high-confidence lane-marker tracks. Similarly, each lane-marker track having a low confidence value may be modelled by a Poisson point process (PPP) RFS. This approach in modelling the lane-marker tracks enables a straightforward approach to assess the confidence in the lane-marker track whereas its spatial properties are described by the spatial distribution. At the end, all lane-marker tracks which are elected to be high-confidence tracks verified by the associated detection clusters are represented by updated probability of existence, the mean vector and the covariance matrix.

In several embodiments and aspects, the lane-marker tracker 300 may comprise a prediction phase, an update phase, a maintenance phase, and a lane assignment phase.

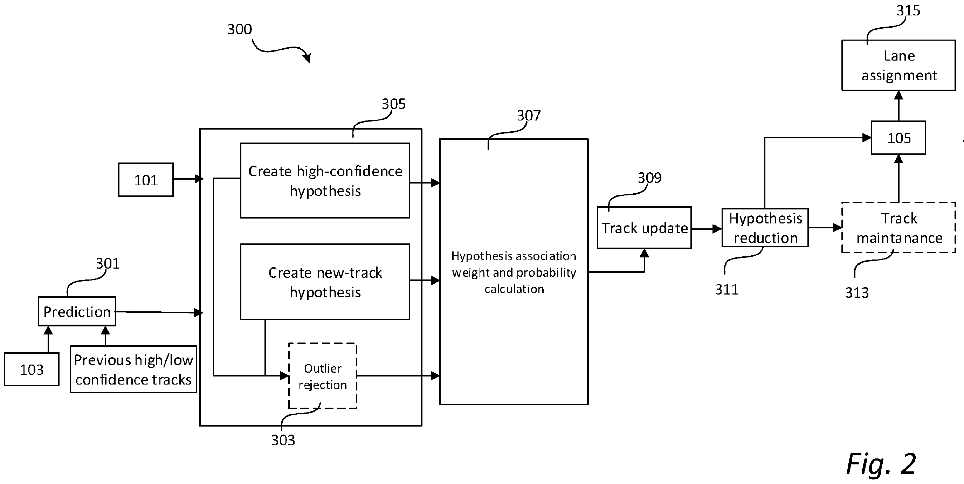

Fig. 2 illustrates a schematic block diagram of an architecture of the multi-target lane tracker 300 according to several aspects and embodiments.

Contrary to known multi-target trackers in the art wherein e.g. a maximum of one sensor detection is allocated to a target i.e. a lane marker, the lane tracker 300 of the present invention utilizes an extended target modelling approach, wherein detection clusters each comprising an arbitrary number of sensor detections of the lane markers on the road portion 24 are used. This means that only a few number of detection clusters are to be considered in the multi-target lane tracker 300 for identifying the corresponding target source i.e. the lane markers.

The proposed solution of the multi-target tracker 300 also has the advantage of being computationally efficient in its modelling approach wherein the detection clusters are combined to produce long-range lane-marker tracks extending along the road portion while providing a high confidence representations of the lane-marker tracks. By modeling the lane-marker tracks as Gaussian random vectors, and using the detection clusters as target points in the extended target model, a hypothesis assignment-based approach is employed to accurately and robustly acquire the information on one or more lane-marker tracks extending along the road portion 24. The hypotheses are formed to establish and ascertain the relationship between the lane-marker tracks, which are constantly predicted according to the state of the ego vehicle on the road relative to the lane markers, and the obtained detection clusters.

Briefly stated, the geometrical representations of the one or more lane-marker tracks are firstly tracked and predicted on the road portion 24 based on the obtained state of the ego vehicle such as obtained ego vehicle data representative of the state of ego vehicle and the data of previously formed lane-marker tracks. Subsequently, and by using the detection clusters, the predicted lane-marker tracks are accurately updated with one or more hypotheses selected by the model, wherein the hypotheses are particularly associated with the detection clusters. Relevance of each hypothesis to a given lane-marker track is assessed based on a weight calculation approach applied to the formed hypotheses. Thanks to the Gaussian random vector modelling, the weight calculation for combinations of multiple hypotheses can be performed in a closed form equation. The calculated closed-form weights of the hypotheses can then be used as inputs to a probability modelling process such as a belief propagation algorithm as known in the art that computes the hypotheses probabilities and ensures the accuracy of the predicted lane-marker tracks. The eminent advantages of the proposed solution are therefore obtaining a real-time and accurate geometrical representation of the one or more lane-marker tracks extending along the road portion 24 while achieving a noticeable computational efficiency in the process. The method steps and details of the proposed solution according to various aspects and embodiments will be discussed extensively in the rest of this description.

Reverting to the lane marker tracker 300 of Fig. 2, the tracker 300 may comprise a prediction module 301, an optional outlier rejection module 303, a hypothesis-creation module 305 which in itself is configured to create hypotheses for the high-confidence lane-marker tracks and low-confidence lane-marker tracks used to create new high-confidence tracks. The tracker 300 further comprises a weight calculation and hypothesis-probability calculation module 307. The lane tracker 300 may further comprise modules to perform further functionalities such as updating the lane-marker tracks (also referred to a hypothesis/track-update module 309) as well as assigning certain combined hypotheses to certain lane-marker tracks (also referred to a hypothesis-reduction module 311). The tracker 300 optionally comprises a track maintenance unit 313 and a lane assignment unit 315. It should be appreciated that even though in this example different entities of the lane-marker tracker 300 are described as individual modules, some or all of these functions may be performed by a single integrated unit comprising some or all the above-mentioned modules. Even further, each step in the process and the modelling steps may be performed sequentially or in parallel with the other steps and processes. For instance, the lane tracker 300 may be partly or entirely implemented in a processing circuitry of the control system 10 of the ego vehicle 1 configured to obtain the input data 101, 103 for the lane tracker and generate the output 105 polynomials representative of the geometrical descriptions of the one of more lane-marker tracks. Thus, it should be clear that referring to these modules or separate entities or steps is solely to assist the reader in understanding the methods and systems presented herein.

In the prediction phase, the lane tracker 300 is configured to obtain the ego vehicle data which may comprise heading and velocity of the ego vehicle and/or employ a random walk process model for the ego vehicle 1 traveling on the road portion 24. Further, the lane tracker 300 is configured to obtain one or more sensor detection clusters from the perception module of the ego vehicle 1, such as the perception module 6 illustrated in Fig. 6.

Each sensor detection cluster comprises an arbitrary number of detections of a subset of lane markers of the plurality of lane markers 241-243 comprised in each lane-marker track 200, 201. The lane tracker is configured to predict, based on the obtained state of the ego vehicle such as obtained ego vehicle data representative of the state of ego vehicle obtained ego vehicle data and also previously formed one or more lane-marker tracks, a geometrical representation of the one or more lane-marker tracks. It should be appreciated that the process of determining the geometrical representation of the lane-marker tracks is an iterative process and the lane tracker 300 is configured to repeatedly acquire the state of the ego vehicle e.g. by continuously acquiring the ego vehicle data, the detection clusters and consequently repeatedly track, predict, update and produce the geometrical description of the lane-marker tracks. "Tracking or track" in the present context is to be construed as collection of information available about the target i.e. the lane marker that was first detected in a particular measurement, consisting of a collection of single-target hypotheses (and the accompanying information) representing different possibilities of measurement sequences corresponding to the target.

Thus, the lane-marker tracks formed previously may be included in the process of prediction of the upcoming lane-marker tracks. The previously-formed tracks may be low-confidence tracks and/or high-confidence tracks. The lane tracker 300 is also configured to determine a confidence value for each of the predicted lane-marker tracks and as mentioned earlier the confidence value for a given predicted lane-marker track may comprise a first confidence value or a second confidence value. The ego vehicle data is used to predict the state and properties of the lane-marker tracks. The dynamics of the lane markers in the ego vehicle frame may be described by models known in the art, and will not explained further herein so as not to obscure the presented solution.

In the update phase, lane marker detections are used to update the spatial state (polynomial coefficients) and properties of the tracked lane-marker tracks and also to initiate new lane-marker tracks. The update phase may thus comprise several processing blocks including outlier rejection, hypothesis creation for high-confidence tracks, hypothesis creation for newly-formed tracks based on the low-confidence tracks, calculation of hypothesis probabilities, hypotheses update, and hypothesis reduction. Updated state of hypotheses which may also be referred to as updated state of lane-marker tracks is a result of calculation of existence probability, mean vector, and a covariance matrix for each lane-marker track.

In several aspects and embodiments, the lane tracker 300 is configured to create one or more hypotheses for each predicted lane-marker track having the first confidence value.

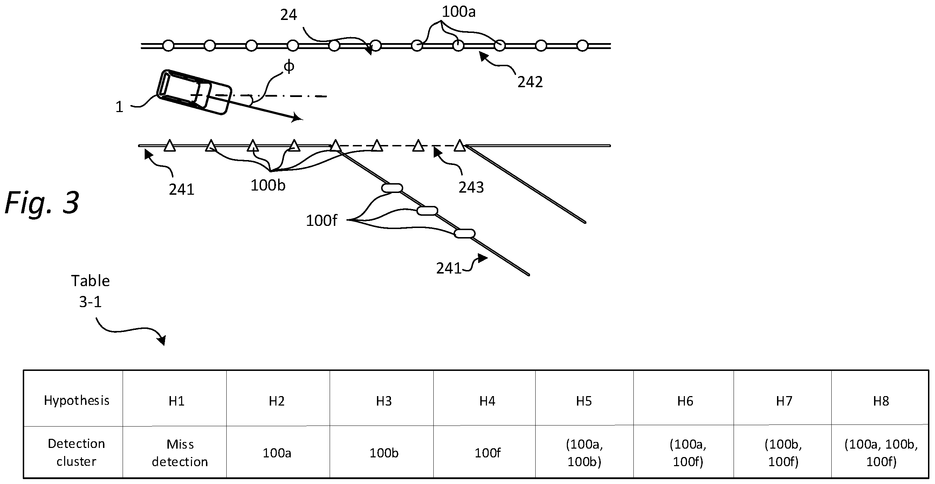

Stated differently, each high-confidence predicted lane-marker track may give rise to several hypotheses. An example is illustrated in Fig. 3 for a given high-confidence track and three example detection clusters 100a, 100b and 100f. The one or more hypotheses created for the given predicted lane-marker track having the first confidence value are shown in table 3-1 and may comprise any one of a miss-detection hypothesis e.g. hypothesis H1 in Fig. 3, a hypothesis for each detection cluster e.g. hypotheses H2-H4 comprising a hypothesis for each detection cluster 100a, 100b and 100f in Fig. 3, and/or a hypothesis for each of at least one combination of the one or more detection clusters e.g. hypotheses H5-H8 comprising a hypothesis for each combination of detection clusters (100a, 100b), (100a, 100f), (100b, 100f) and (100a, 100b, 100f) in Fig. 3.

For each hypothesis created for each of the predicted high-confidence lane-marker tracks a closed-form association weight calculation is performed by means of a closed-form function (f):

$$E_{track}[likelihood(hypothesis \mid track)] = f\left(c_{track}, \sum_{i \in \{single\,instances\}} c_i\right)$$

where $c_{track}$ denotes the track-dependent constant and $c_i$ denotes a single detection cluster-dependent constant.

As mentioned earlier, due to the lane-marker tracks being modelled as a Gaussian random vector, the weight calculation can be computed in closed form, contributing to a noticeable computational efficiency in hypothesis weight calculations. Additionally, the closed-form expression entails that the hypothesis weights of combined detection clusters are obtainable directly from the single-cluster calculated weights. This in turn contributes to a great complexity reduction of the proposed lane tracker. Since only single-cluster weights are used to compute weights of combined clusters, an additional advantage is provided that a large number of hypotheses can be considered for each predicted lane-marker track with a fairly low amount of computational power required. In several embodiments and aspects numerical calculation methods may also be employed.

However, since the total number of hypotheses may grow combinatorically with the increase in the number of single detection clusters for a given lane-marker track, strategies are applied in several embodiments to restrict the number of used hypotheses e.g. by means of applying heuristic factors such as a predetermined maximum number of detection clusters to be considered in creating the hypotheses, for each combination hypothesis ensuring that the combination comprises sensor detections from each detection cluster, taking into account lateral distances between the detection clusters, taking into account number of non-outliers in each detection cluster, not allowing a large gap between the detection clusters in each combination cluster, etc.

Optionally, in some embodiments, a detection may be accepted for a given track (i.e. will be included in a detection cluster for that given lane-marker track) if its likelihood value exceeds a threshold value i.e. if the detection falls within an acceptance region defined with respect to that lane-marker track. The likelihood value may be calculated based on a probability density function (PDF) of the underlying geometrical state representation. In other words after the prediction phase of the lane-marker tracks, the lane tracker 300 is configured to verify and determine if there are any outlier sensor detections which should not be included in the detection clusters which will be used to update and determine the geometrical representations of the predicted lane-marker tracks. This approach of outlier rejection may also be referred to as a gating process by which a region in the vicinity of a track is defined as a gate and based on the certainty or uncertainty of the performed measurements (i.e. sensor detections) with respect to the track the size of the region is varied i.e. the state of the gate changes. For instance, the sensor measurements around each predicted lane-marker track may be defined as an independent and identically distributed (iid) Gaussian measurements. Thus, the acceptance region may be defined as a part of that iid Gaussian which fulfills the gate threshold value. The threshold value may be a fixed threshold value or may be a variable threshold value dependent on e.g. the number of already accepted detections in a given detection cluster around the given predicted lane-marker track. Thus, in the lateral distances closer to the ego-vehicle wherein the variance of the measurements is small, the gate is narrow but kept open to a minimum and thus many detections may fall within the acceptance region. Thus, in some embodiments and aspects, there may be a minimum gate threshold value introduced for preventing the gate from becoming too narrow in the close vicinity of the ego-vehicle. The uncertainty of the sensor detections increases in longitude i.e. along the extension of the predicted lane-marker track which leads to a widening of the gate. Thus, only the detections or a percentage of the detections which have a PDF value exceeding the threshold value will be accepted as falling within the acceptance region. In the very far longitudinal extensions of the given lane-marker track where the uncertainty of a sensor detection belonging to a given lane-marker track increases substantially, the PDF function for that sensor detection falls below the gate threshold value and thus the gate closes. In several embodiments, the measurement gating may be performed using a gate threshold on the Mahalanobis distance i.e. a measure of the distance between a point on the track and the iid Gaussian distribution of the sensor measurements. Thus, for each created hypothesis a certain predicted track and detection cluster are used for gating the sensor measurements i.e. finding the in- or outlier detections. Measurement gating is performed for all hypotheses, i.e. for high- and low confidence lane-marker tracks. It uses the predicted state and determines the detections (within the detection cluster associated to that hypothesis) which are outside the gate threshold i.e. the outliers.

This approach accounts for further confidence in the lane-marker tracks and guarantees that accepted detections exceed a given likelihood threshold value. For example, if the track state is uncertain with respect to the threshold value, a given detection cluster may not contain any detections that exceed the gate threshold value and thus none of the detections will be accepted.

Reverting to Fig. 2, in addition to hypothesis-formation for high-confidence tracks, the lane tracker 300 is also configured to create one or more cluster-track pairs for each predicted lane-marker track having the second confidence value i.e. low-confidence lane-marker tracks. It should be noted that the predicted lane-marker tracks having a low confidence value primarily involve assumptions on where a lane marker may be located, without taking into account any association with a detection cluster. Thus, previously obtained non-informative assumptions of lane-marker tracks can be assigned the low-confidence values and be used to generate new tracks with high confidence values in the process. In more detail, initially low-confidence tracks describe a probability density of where new tracks may appear, but they have never been associated with a detection. Thus, low-confidence tracks may be used to account for detections that originate from a lane marker that is not yet tracked i.e. a lane marker which has not yet entered into the field-of-view of the sensor devices 6a-6c of the ego vehicle 1.

A detection cluster and a given track of the low-confidence tracks may be referred to as a cluster-track pair. The lane tracker 300 is configured to calculate an association weight value for each cluster-track pair, this association weight value may also be referred to as an intermediate weight value for each cluster-track pair. The weights for both high- and low-confidence predicted lane-marker tracks may be computed by means of closed-form functions.

The tracker 300 is configured to, for each predicted lane-marker track having the second confidence value, create a new lane-marker track having the first confidence value i.e. a high-confidence track. This is performed by combining the one or more cluster-track pairs using the calculated intermediate association weights of the one or more cluster-track pairs. The lane tracker 300 is further configured to create a new-track hypothesis for the new lane-marker track which is created based on the combined cluster-track pairs. Moreover, the tracker 300 is configured to perform a weight calculation for the new-track hypothesis created for the new lane-marker track. Thus, each new track has a weight, and a state i.e. an existence probability, a mean vector, and a covariance matrix describing the new-track hypothesis. Consequently, each detection cluster will give rise to a new track. All of the created new tracks will compete for detection clusters in the LBP algorithm.

Cluster-track pairs for low-confidence tracks contain only single detection clusters. No combination of single detection clusters is used for obtaining a new track based on the low-confidence tracks. In other words, a new track hypothesis is created for each detection cluster, but not for a combination of detection clusters. The use of low-confidence tracks enables the lane tracker 300 to rapidly initiate a new track based on previously gathered information.

After the weights for the hypotheses have been calculated for a given track having a high-confidence value, and new tracks have been created based on the low-confidence tracks, a joint probability density function, also referred to as a joint association probability value can be efficiently approximated by using methods known in the art such as loopy belief propagation (LBP) algorithm for all lane-marker tracks comprising the predicted lane-marker tracks having the first confidence value and the new lane-marker tracks having the first confidence value.

In other words, the association of the detection clusters for each high-confidence lane-marker track is viewed as a random variable for which a probability mass function (PMF) is approximated by using an LBP algorithm. Thus, for all lane-marker tracks having the high-confidence value, an iterative LBP algorithm is performed providing the association probabilities for each track-hypothesis combination, wherein the determined joint association probability value for each hypothesis-track combination is indicative of a probability of that hypothesis belonging to that specific lane-marker track. In other words, the weights from new-track hypotheses and weights from the one or more hypotheses created for one or more predicted high-confidence lane-marker tracks are together input into the LBP algorithm to obtain association probabilities for new track-hypotheses and for predicted high-confidence lane-marker tracks. Here the association probabilities for each track-hypothesis combination is determined ensuring that each detection cluster is only used once. The LBP algorithm relates hypotheses to each other and ensures measurements have only one target source (although fractions are possible). It also means measurement information is only used once. In more detail, detection cluster may comprise one or more sensor detections. The lane tracker 300 ensures that a detection cluster is only used once, however fractions of the detection cluster can belong to several tracks. For instance, a first percentage of detections in a detection cluster could belong to an example track 1 and a second percentage of detections in the same detection cluster could belong to an example track 2. However, 100% of the information of that given detection cluster is used only once to determine the updated geometrical states of the one or more predicted tracks. In other words, the lane tracker allows multiple lane-marker tracks to use the same detection clusters by allowing fractional usage. However, the lane tracker also ensures that the sum of the fractions of a given detection cluster never exceeds one.

Ensuring that a detection cluster is only used once is a model assumption of the LBP algorithm. This assumption can be entered as a constraint in the LBP algorithm. Details of application of LBP algorithms to calculate the joint association probabilities can be found in the literature accessible to those skilled in the art.

In several embodiments and aspects, the lane tracker 300 is further configured to select one or more created hypotheses whose hypothesis-track combination joint association probabilities exceed a joint probability threshold value. In other words, all hypotheses with an association probability higher than a threshold value, e.g. a predetermined threshold value are selected for further processing i.e. computing an updated state of each hypothesis.

Therefore, the lane marker is configured to update each lane-marker track with each of the selected one or more hypotheses of that lane-marker track having an association probability value exceeding the threshold value to create one or more updated state(s) of that lane-marker track.

The inventors have realized that the proposed solution provides a noticeable improvement in terms of the computational complexity and memory cost compared to the existing solutions.

That is since the update of each of the hypotheses is performed only after the hypothesis association probability calculation and only for the selected few hypotheses having a probability exceeding the threshold value and not together with the hypothesis weight calculation for all of the created hypotheses. Thus, the computational efficiency of the proposed solution is further improved.

After updating each lane-marker track with the selected hypotheses, the lane tracker 300 is adapted to combine all updated states of each lane-marker track to obtain a single-hypothesis state of each predicted and updated high-confidence lane-marker track as well as the updated new-tracks. The combination of the calculated updated states of the selected hypotheses is achieved by combining a calculated updated probability of existences, a calculated updated mean vectors, and a calculated updated covariance matrices of the selected hypotheses based on the corresponding association probabilities.

In several embodiments such a single-hypothesis state of the tracks may be formed by known methods such as methods of moments approximation. This step of obtaining the single-hypothesis states of the tracks may also be referred to as hypothesis reduction e.g. as shown in Fig. 2. Accordingly, by combining the hypotheses into a single-hypothesis in each iteration, the complexity of estimation of the lane-marker track descriptions is further reduced.

Consequently, after obtaining combining the updated states of lane-marker tracks to obtain the single-hypothesis state of each lane-marker track, the lane tracker 300 is further configured to assign the single-hypothesis state of each predicted high-confidence lane-marker track and each high-confidence new lane-marker track to that respective lane-marker track in order to determine the representation of each lane-marker track extending along the road portion 24. This way the geometrical representation of the one or more lane-marker tracks extending along the road portion 24 can be efficiently and accurately determined. Stated differently, determining the representation of each lane-marker track extending along the road portion may comprise forming the representation of each lane-marker track by assigning the single-hypothesis state of each predicted lane-marker track to that lane-marker track and thus arriving at the determined lane-marker tracks. The processing blocks and steps according to the systems and the methods of the present invention yield a computationally efficient, yet highly accurate lane tracker 300 capable of running in real time. Thus, the ADS systems and features of the ego vehicle receive accurate and reliable lane-marker information in real-time for operation of the ego vehicle.

Furthermore and with respect to the track maintenance module 313, to ensure that no determined tracks i.e. lane marker tracks updated with the single-hypothesis approach describe the same lane markers on the road portion, all the determined tracks may undergo a merging procedure. The lane tracker 300 in several embodiments may be configured to recycle and/or prune high and low-confidence lane-marker tracks, e.g. by applying a distance metric such as Mahalanobis distance or Bhattacharya distance, thus merging the tracks into a single track by means of moments matching methods. After such a merging step, the previous high-confidence tracks receiving low confidence values may be demoted to low-confidence tracks e.g. by means of recycling. Previous low-confidence tracks receiving negligible confidence values may be pruned to limit computational complexities. Note that recycled tracks reduce computational complexity and also allow a rapid start of new tracks if needed.

In several embodiments, the lane tracker 300 may be further configured to assigning a lane label to each lane-marker track with determined geometrical representation, wherein the assigned label may be indicative of a spatial position of the determined lane-marker track with respect to the ego vehicle. For instance, to determine whether a given determined lane-marker track is located on a left, right, adjacent left, or adjacent right of the ego vehicle, an assignment problem can be solved for that given track. A cost matrix for all assignment combinations is built based on lane-marker attributes such as lateral distance to the ego vehicle, range, type, color, etc. and the solutions of the assignment problem may then determine the label assigned to the given determined lane-marker track. For instance, in an example scenario the cost matrix can be built such that the cost of assigning two determined tracks, namely track "i" and track "j" penalizes if a lane width at the ego vehicle frame is determined to be smaller than a predetermined threshold value, or if track "i" and track "j" have large lateral gaps, or if any of the tracks are not previously assigned with a label, or if one of the lane labels is determined not to have been assigned to any of the determined tracks, or if lane markings are determined to be colored, etc.

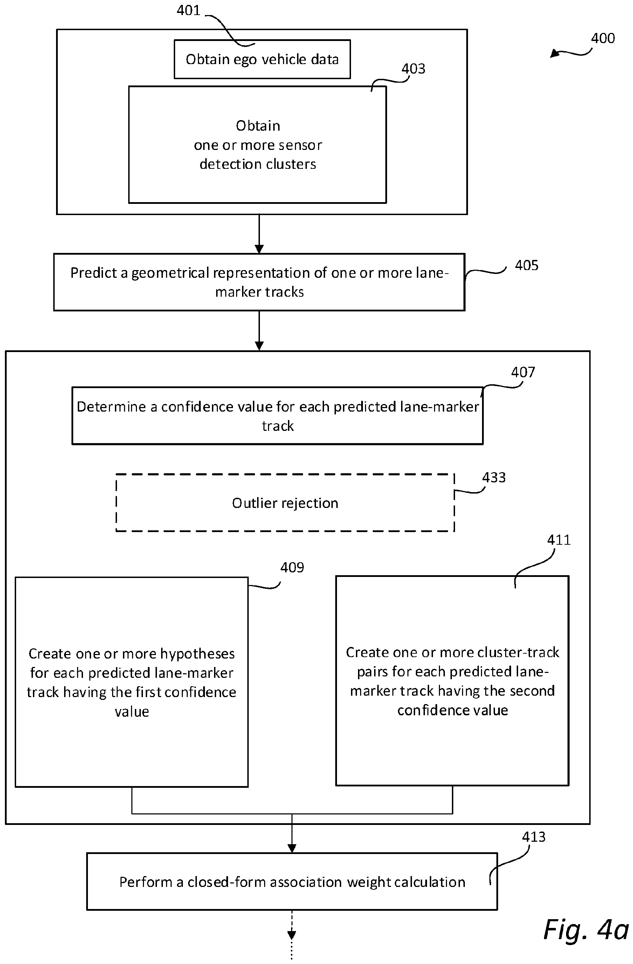

Figs. 4a-b show flowcharts of a method 400 according to various aspects and embodiments of the present invention for determining a geometrical representation of one or more lane-marker tracks 200, 201 extending along a road portion 24, wherein each lane-marker track comprises a plurality of lane markers 241-243. The method comprises obtaining 401 ego vehicle 1 data which may comprise heading and velocity of the ego vehicle. The ego vehicle is traveling on the road portion 24. The method further comprises obtaining 403 one or more sensor detection clusters 100a-f from a perception module 6 of the ego vehicle 1, each sensor detection cluster comprising detections of a subset of lane markers of the plurality of lane markers comprised in each lane-marker track. The method further comprises predicting 405, based on the obtained state of the ego vehicle and previously formed one or more lane-marker tracks, a geometrical representation of the one or more lane-marker tracks 200, 201. Moreover, the method further comprises determining 407 a confidence value for each predicted lane-marker track, wherein the confidence value for a given predicted lane-marker track comprises a first confidence value or a second confidence value. As mentioned earlier, the first confidence value may be referred to as the high-confidence value in relation to the second confidence value which may be referred to as the low-confidence value. In the present context, predicting 405 the geometrical representation of the one or more lane-marker tracks 200, 201 comprises calculating the probability of existence, mean vector, and covariance matrix for the high confidence tracks based on the obtained state of the ego vehicle and previously formed one or more lane-marker tracks. Low confidence tracks undergo a similar process of predicting with a slight difference that no probability of existence is updated in the prediction step since these tracks are modelled by the PPP model.

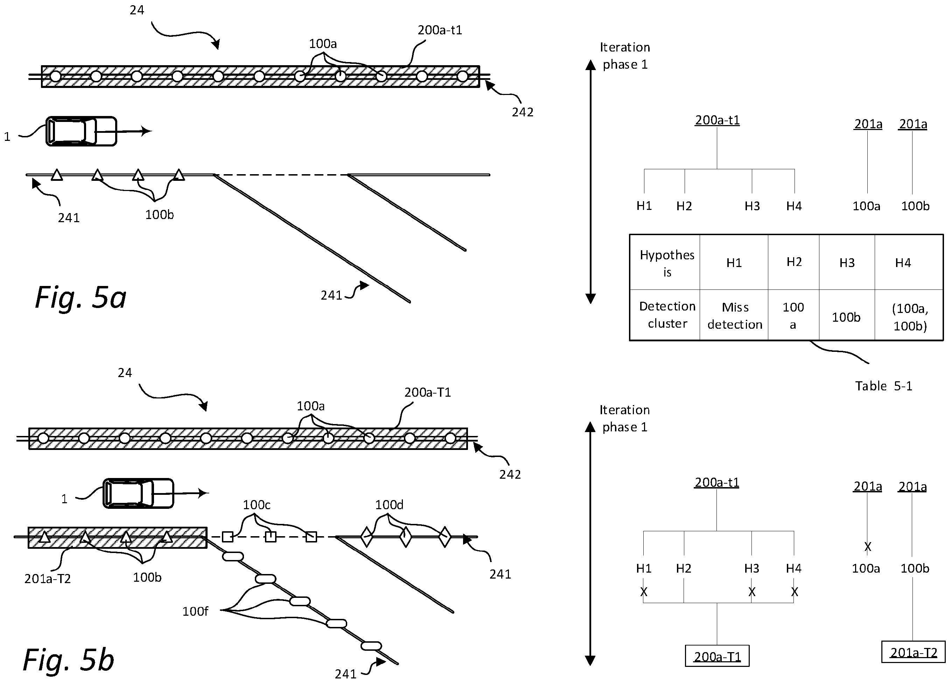

An example is shown in Figs. 5a-d in conjunction with the flowchart of the method 400, wherein the lane tracker 300 being implemented in the control system 10 of the ego vehicle 1 is configured to execute the method 400. In this example an iterative solution based on the method 400 of the present invention is presented to further elucidate various aspects of the method 400. In Fig. 5a, the ego vehicle is travelling on road portion 24, wherein in the iteration phase 1, one high-confidence track 200a-t1 is predicted by the lane tracker 300, and two detection clusters 100a, 100b each comprising an arbitrary number of detections of the lane markers 241-243 are obtained. In this example, the method 400 optionally comprises an outlier rejection step for the detections of the detection clusters 100a, 100b. The outlier rejection may be applied to the predicted high-confidence tracks such as track 200a-t1 or to the predicted low-confidence tracks upon which new tracks may be built. The outlier rejection may comprise determining 433 for each detection comprised in each detection cluster 100a, 100b, if a likelihood of that detection exceeds a predetermined gate threshold value, that the detection is an acceptable detection for the given predicted lane-marker track. The details of the outlier rejection has been explained earlier with respect to module 303 in the architecture of the lane tracker 300 in Fig. 2. The method 400 further comprises creating 409 one or more hypotheses e.g. H1-H4 in the example table 5-1 of Fig. 5a, for each predicted lane-marker track having the first confidence value i.e. the high-confidence track 200a-t1 in Fig. 5a. The method further comprises creating 411 one or more cluster-track pairs e.g. (100a, 201a), (100b, 201a) in the example of Fig. 5a for each predicted lane-marker track having the second confidence value i.e. the low-confidence track 201a in Fig. 5a.

The method 400 further comprises performing 413 a closed-form association weight calculation for each hypothesis H1-H4 for each predicted lane-marker track having the first confidence value e.g. track 200a-t1. The one or more hypotheses created for a given predicted lane-marker track having the first confidence value may comprise any one of a miss-detection hypothesis e.g. hypothesis H1 in Fig. 5a being associated with no detection cluster, a hypothesis for each detection cluster e.g. hypotheses H2 and H3 each associated with a single detection cluster 100a and 100b respectively, and/or a hypothesis for each of at least one combination of the one or more detection clusters e.g. hypothesis H4 associated with a combination of detection clusters 100a and 100b.

In several embodiments, calculation of the association weight of each hypothesis for a combination of the one or more detection clusters may comprises calculating 413 the association weight by combining the calculated association weights of hypotheses for each single detection cluster comprised in the at least one combination of the one or more detection clusters.

Moving on, the method 400 also comprises performing 413 the closed-form association weight calculation for each cluster-track pair e.g. (100a, 201a), (100b, 201a) created for each of the predicted lane-marker tracks having the second confidence value e.g. track 201a.

Even further the method 400 for each predicted lane-marker track having the second confidence value comprises creating 423 a new lane-marker track e.g. 201a-T2 having the first confidence value by combining the one or more cluster-track pairs using the calculated association weights (intermediate weights) of the one or more cluster-track pairs. The method further comprises creating 425 a new-track hypothesis for the new lane-marker track and calculating 427 an association weight for the new-track hypothesis created for the new lane-marker track. As stated earlier, all low confidence lane-marker tracks are jointly modelled by a PPP. The PPP may have multiple components (i.e. each low-confidence lane-marker track as a component of the PPP) wherein each detection cluster is evaluated against each component. To create a new lane-marker track, each PPP component is matched to a given detection cluster resulting in an intermediate weight that is used to combine the components into a new lane-marker track with a corresponding association weight. This procedure is repeated for all detection clusters. In Fig. 5b the calculated association weights of cluster-track pairs (100a, 201a), (100b, 201a) are combined to create a new track with a high confidence value. Thus, the cluster-track pair having a higher association weight e.g. (100b, 201a) will contribute to a greater extent to the calculation of the weight of the new-track hypothesis.

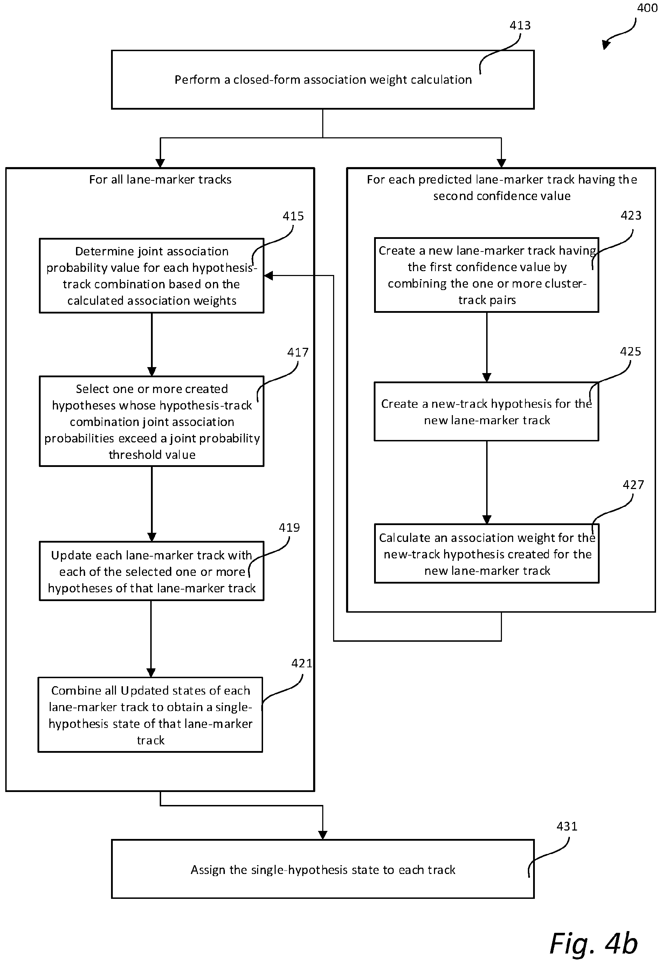

The method 400 continues to Fig. 4b and further comprises, for all lane-marker tracks comprising the predicted lane-marker tracks and the new lane-marker tracks having the first confidence value, determining 415 a joint association probability value for each hypothesis-track combination based on the calculated association weight of that hypothesis created for its corresponding lane-marker track e.g. 200a-t1 or 201a-T2. This way, the joint association probability value is calculated for all the hypothesis-track combinations. For instance for the example of Fig. 5a, the joint association probability value is determined for each of the hypothesis-track combinations of the predicted high-confidence track 200a-t1 e.g. (H1, 200at1), (H2, 200a-t1), (H3, 200a-t1) and (H4, 200a-t1). In other embodiments and examples, if there were more than one high-confidence track predicted by the lane tracker 300, the joint association probability value will evidently be calculated for the combinations of all the hypotheses H1-H4 for all the existing predicted high-confidence tracks based on the calculated association weights of each of the hypotheses H1-H4 for each of the tracks. For the low-confidence track 201a and each detection cluster 100a, 100b, the created new-track 201a-T2 is associated with a new-track hypothesis, whose weight is input to the LBP algorithm to calculate its association probability together with the hypotheses of the track 200a-t1. Weights from both high-confidence track hypotheses created for the predicted high-confidence tracks as well as weights from the high-confidence new lane marker tracks are input to the LBP algorithm to obtain the joint association probabilities. If the new-track hypothesis has an association probability exceeding the joint probability threshold value it will be accepted and the updated state of that hypothesis is calculated. The formed new track is now a high-confidence track.

The determined joint association probability value for each hypothesis-track combination is indicative of a probability of that hypothesis belonging to that specific lane-marker track. The method 400 further comprises selecting 417, one or more created hypotheses whose hypothesis-track combination joint association probabilities exceed a joint probability threshold value. In Fig. 5b for instance, the joint association probability value of the hypothesis-track combination (H2, 200a-t1) is higher than the joint probability threshold value and thus this combination is selected. The same applies for the new track 201a-T2 having a higher-than threshold joint association probability value and thus being selected. The method 400 further comprises updating 419 each lane-marker track with each of the selected one or more hypotheses of that lane-marker track e.g. updating the track 200a-t1 with the selected hypothesis H2 comprising the cluster detection 100a and updating track 201a-T2 with its only new-track hypothesis to create one or more updated state(s) of that lane-marker track.

The method 400 further comprises combining 421 all updated states of each lane-marker track (i.e. updated states of all the hypotheses) to obtain a single-hypothesis state of that respective lane-marker track, for instance as shown in Fig. 5b for the high-confidence track 200a-t1, the single-hypothesis state of 200a being determined as 200a-T1. In general for all tracks the single-hypothesis state is calculated by calculating the updated probability of existence, mean vector and the covariance matrix. The result is a track with a single hypothesis described by an updated probability of existence, a mean vector, and a state covariance matrix. Combining hypotheses for new tracks is straightforward, since each of these tracks has only one corresponding hypothesis. This is done simply by only calculating the existence probability of the new track.

For both the high-confidence tracks and the newly created tracks the method 400 further comprises assigning 431 the single-hypothesis state of each lane-marker track having the first confidence value and each new lane-marker track having the first confidence value to that lane-marker track in order to determine the representation of each lane-marker track extending along the road portion. In Fig. 5b the hypotheses-track combinations or the cluster-track pairs which have not been selected are shown as eliminated with crosses "X".

In several embodiments, the method 400 may also comprise controlling the ego vehicle 1 based on the determined representation of each lane-marker track extending along the road portion. For example, the determined geometrical representation of the one or more lane-marker tracks may be used as input to one or more ADS features of the ego vehicle 1 configured to control one or more of acceleration, steering, and braking of the vehicle.

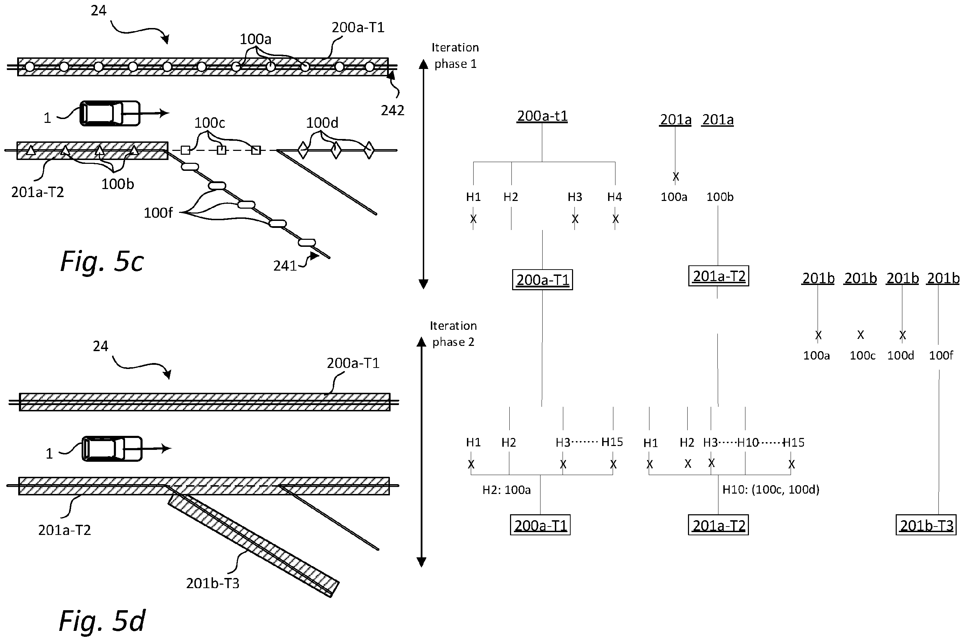

Since the method 400 is an iterative method, it can be repeated continuously as the ego vehicle 1 continues to travel on the road portion 24 as well as while new detections of the lane markers are obtained and new detection clusters formed. For instance in Figs. 5c-d, based on the determined tracks 200a-T1 and 201a-T2 and newly formed detection clusters 100c, 100d and 100f in addition to previous detection cluster 100a, the method proceeds to iteration phase 2 by building hypotheses H1-H15 and cluster-track pairs (100a, 201b), (100c, 201b), (100d, 201b), (100f, 201b), now based on the above two high-confidence tracks 200a-T1 and 201a-T2 and new detection clusters. It should be appreciated that the determined tracks are estimated as long-range lane-marker track descriptions extending as far as possible along the road portion 24, e.g. track 200a-T1 and detection cluster 100a which continue to be used in iteration phase 2 and extend as long as possible along the road portion 24 while new predicted tracks and detection clusters are formed during the path of the ego vehicle 1 on the road portion 24. This will also account for changes in the road geometry, road curvature, and changes of lane markers present on different sections of the road portion. Similar to iteration phase 1, various hypothesis-track combinations are formed for both high-confidence tracks 200a-T1 and 201a-T2 as well as cluster-track pairs based on the detection clusters 100a, 100c, 100d and 100f as shown in Fig. 5c. After hypothesis association weight calculations and forming new tracks e.g. 201b-T3 based on the predicted low-confidence tracks, joint association probability calculations are performed for all the hypothesis-track combinations by the method 400, and the lane-marker tracks are updated by the selected hypotheses e.g. H2 and H10 and 100f in Figs. 5c-d. Similarly, the eliminated hypotheses-track combinations or the cluster-track pairs are marked with crosses "X" in Figs. 5c-d. Hypothesis reduction block 311 is applied to the updated states of lane-marker tracks to achieve the single-hypothesis states of each lane-marker track in a similar manner to iteration phase 1, thus resulting in the output of the lane tracker 300 as shown in Fig. 5d, wherein the previously determined tracks 200a-T1, 201a-T2 continue to extend along the road portion 24, while the new track 201b-T3 is determined in the iteration phase 2.

In several aspects and embodiments of the method 400, updating each predicted lane-marker track having the first confidence value and/or each new lane-marker track created based on the predicted lane-marker tracks having the second confidence value, with each of the one or more selected hypotheses of that respective predicted lane-marker track and/or with the new-track hypothesis of that respective new lane-marker track may comprises updating 419, 429 at least one parameter of a Gaussian random vector representing that predicted lane-marker track and/or the new lane-marker track, with the one or more sensor detection clusters comprised in each selected hypothesis and/or the detection cluster comprised in the new-track hypothesis respectively. The random Gaussian vector is parameterized by a vector and a matrix. For each random Gaussian vector, the vector may be a mean vector and the matrix may be a covariance matrix denoting the coefficients of the polynomial representation of the lane-marker tracks. Furthermore, updating may comprise updating the existence probability of the lane-marker tracks. As mentioned earlier, this model allows for a relatively simple, yet robust and accurate updates of the geometrical representation e.g. polynomial coefficients by the detection clusters.

In various aspects and embodiments, the predictions and measurement updates of the polynomial coefficients may be performed by the control system 10 by using linear or non-linear filtering e.g. by using a Bayesian filter or a combination of multiple Bayesian filters. In several aspects and embodiments, each Bayesian filter may be one of linear Kalman Filter, Extended Kalman Filter (EKF), Unscented Kalman Filter (UKF), Cubature Kalman Filter (CKF). Updating the polynomial coefficients of the lane-marker tracks only with the detection clusters associated with the selected few hypotheses according to the method 400 provides a noticeable improvement in terms of the computational complexity and memory cost compared to the existing solutions.

The method 400 in several aspects and embodiments may further comprise assigning 435 a lane label to each lane-marker track with determined representation, wherein the assigned label is indicative of a spatial position of the lane-marker track with respect to the ego vehicle 1.

Fig. 6 is a schematic side view of an ego vehicle 1 comprising a control system 10 configured to determine the geometrical representations of the one or more lane-marker tracks extending along a road portion 24 on which the ego vehicle 1 is traveling. The vehicle 1 further comprises a perception system 6. A perception system 6 is in the present context to be understood as a system responsible for acquiring raw as well as processed sensor data of the on-board sensors 6a, 6b, 6c such as cameras, LIDARs and RADARs, ultrasonic sensors, and converting this data into scene understanding. In particular, the vehicle 1 has at least one vehicle-mounted camera, radar, and/or LIDAR 6c for monitoring and acquiring sensor data from a surrounding environment of the vehicle including the detections of the lane markers present on the road portion. The vehicle 1 also comprises velocity measurement and calculation devices to obtain the velocity of the ego vehicle on the road portion 24. The vehicle 1 may also comprise a localization system 5 configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. The localization system may further comprise inertial measurement units (IMUs). An IMU may be understood as a device configured to detect linear acceleration using one or more accelerometers and rotational rate using one or more gyroscopes. Thus, in some embodiments the localization of the vehicle's heading and orientation may be based on motion sensor data e.g. data from accelerometers and gyroscopes, from the IMU. Moreover, in the present context the vehicle 1 may also have access to a digital map (e.g. a HD-map), either in the form of a locally stored digital map or via a remote data repository accessible via an external communication network 20.

The control system 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for determining the geometrical representations of one or more lane-marker tracks extending along the road portion 24 on which the vehicle 1 is travelling. The ego vehicle 1 is equipped with an ADS feature. In more detail, the control circuitry 11 is configured to perform the method steps of the method 400 in Figs. 4a-b and with reference to Figs. 5a-d. The memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the vehicle 1 may be connected to external network(s) 20 via for instance a wireless link (e.g. for retrieving map data). The same or some other wireless link may be used to communicate with other external vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The present invention has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. In several aspects and embodiments, there is provided a computer program product comprising instructions which, when the program is executed by one or more processors of a processing system, causes the processing system to carry out the method according to any one of the embodiments of the method of the present invention.

Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 may have an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the ego-vehicle 1 further comprises a sensor interface 13 which may also provide the possibility to acquire sensor data directly or via dedicated perception module 6 in the vehicle. The vehicle 1 may also comprise a communication/antenna interface 14 which may further provide the possibility to send output to a remote location (e.g. remote operator or control center) by means of an antenna 8. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system, wherein the external system comprises the control system to perform the method steps according to several embodiments of the method 400. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention.

Other solutions, uses, objectives, and functions within the scope of the invention as claimed in the below described patent claims should be apparent for the person skilled in the art.

## Claims

1. A method for determining a representation of one or more lane-marker tracks extending along a road portion, each lane-marker track comprising a plurality of lane markers, the method comprising:

   obtaining, by means of a motion model, a state of an ego vehicle traveling on the road portion;
   obtaining one or more sensor detection clusters from a perception module of the ego vehicle, each sensor detection cluster comprising detections of a subset of lane markers of the plurality of lane markers comprised in each lane-marker track;
   predicting, based on the obtained state of the ego vehicle and previously formed one or more lane-marker tracks, a geometrical representation of the one or more lane-marker tracks;
   determining for each predicted lane-marker track, a respective first confidence value or a respective second confidence value different from the first confidence value;
   creating one or more hypotheses for each predicted lane-marker track having the first confidence value;
   creating one or more cluster-track pairs for each predicted lane-marker track having the second confidence value;
   performing an association weight calculation, by means of a closed-form function, for each hypothesis and each cluster-track pair created for each of the predicted lane-marker tracks having the first or the second confidence values respectively;
   for each predicted lane-marker track having the second confidence value:

   creating a new lane-marker track having the first confidence value by combining the one or more cluster-track pairs using the calculated association weights of the one or more cluster-track pairs;
   creating a new-track hypothesis for the new lane-marker track; and
   calculating an association weight for the new-track hypothesis created for the new lane-marker track by means of the closed-form function;
   for all lane-marker tracks comprising the predicted lane-marker tracks and the new lane-marker tracks having the first confidence value:

   determining a joint association probability value for each hypothesis-track combination based on the calculated association weight of that hypothesis created for its corresponding lane-marker track, the determined joint association probability value for each hypothesis-track combination being indicative of a probability of that hypothesis belonging to that specific lane-marker track;
   selecting one or more created hypotheses whose hypothesis-track combination joint association probabilities exceed a joint probability threshold value;
   updating each lane-marker track with each of the selected one or more hypotheses of that lane-marker track to create one or more updated state(s) of that lane-marker track by updating at least one parameter of a Gaussian random vector, representing that predicted lane-marker track with the one or more sensor detection clusters comprised in each selected hypothesis of that lane-marker track, wherein the Gaussian random vector is parameterized by a mean vector and a covariance matrix;
   combining all updated states of each lane-marker track, by combining a calculated updated probability of existence, calculated updated mean vectors, and calculated updated covariance matrices of the one or more selected hypotheses, to obtain a single-hypothesis state of that lane-marker track;
   wherein the method further comprises:
   assigning the single-hypothesis state of each lane-marker track to that lane-marker track in order to determine the representation of each lane-marker track extending along the road portion.

2. The method according to claim 1, wherein for a given predicted lane-marker track the method further comprises:
   determining for each detection comprised in each detection cluster, if a likelihood of that detection exceeds a predetermined gate threshold value, that the detection is an acceptable detection for the given predicted lane-marker track.

3. The method according to any one of claims 1 or 2, wherein the motion model is based on any one of ego vehicle data comprising any one of a velocity and heading of the ego vehicle and a random walk process model indicative of a state of the ego vehicle on the road portion.

4. The method according to any one of claims 1-3, wherein the one or more hypothesis created for a given predicted lane-marker track having the first confidence value comprises any one of a miss-detection hypothesis, a hypothesis for each detection cluster, and a hypothesis for each of at least one combination of the one or more detection clusters.

5. The method according to any one claims 1 - 4, wherein determining the representation of each lane-marker track extending along the road portion comprises:
forming the representation of each lane-marker track by assigning the single-hypothesis state of each lane-marker track to that lane-marker track.

6. The method according to any one of the preceding claims, wherein updating each lane-marker track with each of the selected one or more hypotheses of that lane-marker track to create one or more updated state(s) of that lane-marker track comprises:
updating each predicted lane-marker track having the first confidence value with each of the one or more selected hypotheses of that predicted lane-marker track and updating each new lane-marker track having the first confidence value created based on the predicted lane-marker tracks having the second confidence value with the new-track hypothesis of that new lane-marker track.

7. The method according to claim 4, wherein calculation of the association weight of each hypothesis for a combination of the one or more detection clusters comprises:
calculating the association weight by combining the calculated association weights of hypotheses for each single detection cluster comprised in the at least one combination of the one or more detection clusters.

8. The method according to any one of the preceding claims, wherein the method further comprises:
assigning a lane label to each lane-marker track with determined representation, wherein the assigned label is indicative of a spatial position of the lane-marker track with respect to the ego vehicle.

9. A computer-readable storage medium storing one or more programs configured to be executed by one or more processors of a processing system, the one or more programs comprising instructions for performing the method according to any one of the preceding claims.

10. A system for determining a representation of one or more lane-marker tracks extending along a road portion, each lane-marker track comprising a plurality of lane markers, the system comprising control circuitry configured to:

> Obtain, by means of a motion model, a state of an ego vehicle traveling on the road portion;
> obtain one or more sensor detection clusters from a perception module of the ego vehicle, each sensor detection cluster comprising detections of a subset of lane markers of the plurality of lane markers comprised in each lane-marker track;
> predict, based on the obtained ego vehicle data and previously formed one or more lane-marker tracks, a geometrical representation of the one or more lane-marker tracks;
> determine for each predicted lane-marker track, a respective first confidence value or a respective second confidence value different from the first confidence value;
> create one or more hypotheses for each predicted lane-marker track having the first confidence value;
> create one or more cluster-track pairs for each predicted lane-marker track having the second confidence value;
> perform an association weight calculation, by means of a closed-form function, for each hypothesis and each cluster-track pair created for each of the predicted lane-marker tracks having the first or the second confidence values respectively;
> for each predicted lane-marker track having the second confidence value:

>> create a new lane-marker track having the first confidence value by combining the one or more cluster-track pairs using the calculated association weights of the one or more cluster-track pairs;
>> create a new-track hypothesis for the new lane-marker track; and
>> calculate an association weight for the new-track hypothesis created for the new lane-marker track by means of the closed-form function;

for all lane-marker tracks comprising the predicted lane-marker tracks and the new lane-marker tracks having the first confidence value:

determine a joint association probability value for each hypothesis-track combination based on the calculated association weight of that hypothesis for its corresponding lane-marker track, the determined joint association probability value for each hypothesis-track combination being indicative of a probability of that hypothesis belonging to that specific lane-marker track;

select, one or more created hypotheses whose hypothesis-track combination joint association probabilities exceed a joint probability threshold value;

update each lane-marker track with each of the selected one or more hypotheses of that lane-marker track to create one or more updated state(s) of that lane-marker track by updating at least one parameter of a Gaussian random vector, representing that predicted lane-marker track with the one or more sensor detection clusters comprised in each selected hypothesis of that lane-marker track, wherein the Gaussian random vector is parameterized by a mean vector and a covariance matrix;

combine all updated states of each lane-marker track, by combining a calculated updated probability of existence, calculated updated mean vectors, and calculated updated covariance matrices of the one or more selected hypotheses, to obtain a single-hypothesis state of that lane-marker track;

wherein the processing circuitry is further configured to:

assign the single-hypothesis state of each lane-marker track to that lane-marker track in order to determine the representation of each lane-marker track extending along the road portion.

11. The system according to claim 10, wherein the control circuitry is configured to, for a given predicted lane-marker track:
determine for each detection comprised in each detection cluster, if a likelihood of that detection exceeds a predetermined gate threshold value, that the detection is an acceptable detection for the given predicted lane-marker track.

12. The system according to any one of claims 10 or 11, wherein the motion model is based on any one of ego vehicle data comprising any one of a velocity and heading of the ego vehicle and a random walk process model indicative of a state of the ego vehicle on the road portion.

13. The system according to any one of claims 10 - 12, wherein the control circuitry is further configured to:
assign a lane label to each lane-marker track with determined representation, wherein the assigned label is indicative of a spatial position of the lane-marker track with respect to the ego vehicle.

14. A vehicle comprising:

an Automated Driving System, ADS;
a perception module comprising one or more on-board sensors for monitoring a surrounding environment of the vehicle; and
a system according to any one of claims 10 - 13.

**Patentansprüche**

1. Verfahren zum Bestimmen einer Darstellung einer oder mehrerer Fahrstreifenmarkierungsspuren, die sich entlang eines Straßenabschnitts erstrecken, wobei jede Fahrstreifenmarkierungsspur eine Vielzahl von Fahrstreifenmarkierungen umfasst, wobei das Verfahren Folgendes umfasst:

Erhalten, mittels eines Bewegungsmodells, eines Zustands eines Ego-Fahrzeugs, das auf dem Straßenabschnitt fährt;
Erhalten einer oder mehrerer Sensorerkennungscluster von einem Wahrnehmungsmodul des Ego-Fahrzeugs, wobei jeder Sensorerkennungscluster Erkennungen einer Teilmenge von Fahrstreifenmarkierungen der Vielzahl von Fahrstreifenmarkierungen umfasst, die in jeder Fahrstreifenmarkierungsspur umfasst sind;
Vorhersagen, basierend auf dem erhaltenen Zustand des Ego-Fahrzeugs und der zuvor gebildeten einen oder mehreren Fahrstreifenmarkierungsspuren, einer geometrischen Darstellung der einen oder der mehreren Fahrstreifenmarkierungsspuren;
Bestimmen, für jede vorhergesagte Fahrstreifenmarkierungsspur, eines jeweiligen ersten Konfidenzwertes oder eines jeweiligen zweiten Konfidenzwertes, der sich von dem ersten Konfidenzwert unterscheidet;

Erstellen einer oder mehrerer Hypothesen für jede vorhergesagte Fahrstreifenmarkierungsspur, die den ersten Konfidenzwert aufweist;

Erstellen einer oder mehrerer Cluster-Spur-Paare für jede vorhergesagte Fahrstreifenmarkierungsspur, die den zweiten Konfidenzwert aufweist;

Durchführen einer Zuordnungsgewichtungsberechnung, mittels einer geschlossenen Funktion, für jede Hypothese und jedes Cluster-Spur-Paar, das für jede der vorhergesagten Fahrstreifenmarkierungsspuren erstellt wurde, die den ersten bzw. den zweiten Konfidenzwert aufweisen;

für jede vorhergesagte Fahrstreifenmarkierungsspur, die den zweiten Konfidenzwert aufweist:

Erstellen einer neuen Fahrstreifenmarkierungsspur, die den ersten Konfidenzwert aufweist, durch Kombinieren des einen oder der mehreren Cluster-Spur-Paare unter Verwendung der berechneten Zuordnungsgewichtungen des einen oder der mehreren Cluster-Spur-Paare;

Erstellen einer neuen Spurhypothese für die neue Fahrstreifenmarkierungsspur; und

Berechnen einer Zuordnungsgewichtung für die neue Spurhypothese, die für die neue Fahrstreifenmarkierungsspur mittels der geschlossenen Funktion erstellt wird;

für sämtliche Fahrstreifenmarkierungsspuren, welche die vorhergesagte Fahrstreifenmarkierungsspuren und die neuen Fahrstreifenmarkierungsspuren, die den ersten Konfidenzwert aufweisen, umfassen:

Bestimmen eines gemeinsamen Zuordnungswahrscheinlichkeitswertes für jede Hypothese-Spur-Kombination basierend auf der berechneten Zuordnungsgewichtung dieser Hypothese, die für deren entsprechende Fahrstreifenmarkierungsspur erstellt wurde, wobei der bestimmte gemeinsame Zuordnungswahrscheinlichkeitswert für jede Hypothese-Spur-Kombination eine Wahrscheinlichkeit angibt, dass diese Hypothese zu dieser spezifischen Fahrstreifenmarkierungsspur gehört;

Auswählen einer oder mehrerer erstellter Hypothesen, deren gemeinsame Zuordnungswahrscheinlichkeiten der Hypothese-Spur-Kombination einen gemeinsamen Wahrscheinlichkeitsschwellenwert überschreiten;

Aktualisieren jeder Fahrstreifenmarkierungsspur mit jeder der einen oder der mehreren ausgewählten Hypothesen dieser Fahrstreifenmarkierungsspur, um einen aktualisierten Zustand oder mehrere aktualisierte Zustände dieser Fahrstreifenmarkierungsspur durch Aktualisieren mindestens eines Parameters eines Gaußschen Zufallsvektors zu erstellen, der diese vorhergesagte Fahrstreifenmarkierungsspur darstellt, mit dem einen oder den mehreren Sensorerkennungsclustern, die in jeder ausgewählten Hypothese dieser Fahrstreifenmarkierungsspur umfasst sind, wobei der Gaußsche Zufallsvektor durch einen Mittelwertvektor und eine Kovarianzmatrix parametrisiert ist;

Kombinieren sämtlicher aktualisierter Zustände jeder Fahrstreifenmarkierungsspur durch Kombinieren einer berechneten aktualisierten Existenzwahrscheinlichkeit, berechneter aktualisierter Mittelwertvektoren und berechneter aktualisierter Kovarianzmatrizes der einen oder der mehreren ausgewählten Hypothesen, um einen Einzelhypothesenzustand dieser Fahrstreifenmarkierungsspur zu erhalten;

wobei das Verfahren ferner Folgendes umfasst:

Zuweisen des Einzelhypothesenzustands jeder Fahrstreifenmarkierungsspur zu dieser Fahrstreifenmarkierungsspur, um die Darstellung jeder Fahrstreifenmarkierungsspur zu bestimmen, die sich entlang des Straßenabschnitts erstreckt.

2. Verfahren nach Anspruch 1, wobei das Verfahren für eine gegebene vorhergesagte Fahrstreifenmarkierungsspur ferner Folgendes umfasst:

Bestimmen für jede Erkennung, die in jedem Erkennungscluster umfasst ist, wenn eine Wahrscheinlichkeit dieser Erkennung einen vorbestimmten Gate-Schwellenwert überschreitet, dass es sich bei der Erkennung um eine annehmbare Erkennung für die gegebene vorhergesagte Fahrstreifenmarkierungsspur handelt.

3. Verfahren nach einem der Ansprüche 1 oder 2, wobei das Bewegungsmodell auf einem beliebigen von Ego-Fahrzeug-Daten, die ein beliebiges von einer Geschwindigkeit und einem Kurs des Ego-Fahrzeugs umfassen, und einem Random-Walk-Prozessmodell, das einen Zustand des Ego-Fahrzeugs auf dem Straßenabschnitt angibt, basiert.

4. Verfahren nach einem der Ansprüche 1 - 3, wobei die eine oder die mehreren Hypothesen, die für eine gegebene vorhergesagte Fahrstreifenmarkierungsspur erstellt werden, die den ersten Konfidenzwert aufweist, eine beliebige von einer Fehlererkennungshypothese, einer Hypothese für jeden Erkennungscluster und einer Hypothese für jede von mindestens einer Kombination des einen oder der mehreren Erkennungscluster umfasst.

5. Verfahren nach einem der Ansprüche 1 - 4, wobei das Bestimmen der Darstellung jeder Fahrstreifenmarkierungsspur, die sich entlang des Straßenabschnitts erstreckt, Folgendes umfasst:
Bilden der Darstellung jeder Fahrstreifenmarkierungsspur durch Zuweisen des Einzelhypothesen-Zustands jeder Fahrstreifenmarkierungsspur zu dieser Fahrstreifenmarkierungsspur.

6. Verfahren nach einem der vorhergehenden Ansprüche, wobei das Aktualisieren jeder Fahrstreifenmarkierungsspur mit jeder der einen oder der mehreren ausgewählten Hypothesen dieser Fahrstreifenmarkierungsspur, um einen aktualisierten Zustand oder mehrere aktualisierte Zustände dieser Fahrstreifenmarkierungsspur zu erstellen, Folgendes umfasst:
Aktualisieren jeder vorhergesagten Fahrstreifenmarkierungsspur, die den ersten Konfidenzwert aufweist, mit jeder der einen oder der mehreren ausgewählten Hypothesen dieser vorhergesagten Fahrstreifenmarkierungsspur und Aktualisieren jeder neuen Fahrstreifenmarkierungsspur, die den ersten Konfidenzwert aufweist, der basierend auf den vorhergesagten Fahrstreifenmarkierungsspuren erstellt wurde, die den zweiten Konfidenzwert aufweisen, mit der neuen Spurhypothese dieser neuen Fahrstreifenmarkierungsspur.

7. Verfahren nach Anspruch 4, wobei die Berechnung der Zuordnungsgewichtung jeder Hypothese für eine Kombination des einen oder der mehreren Erkennungscluster Folgendes umfasst:
Berechnen der Zuordnungsgewichtung durch Kombinieren der berechneten Zuordnungsgewichtungen von Hypothesen für jeden Einzelerkennungscluster, der in der mindestens einen Kombination des einen oder der mehreren Erkennungscluster umfasst ist.

8. Verfahren nach einem der vorhergehenden Ansprüche, wobei das Verfahren ferner Folgendes umfasst:
Zuweisen einer Fahrstreifenbezeichnung zu jeder Fahrstreifenmarkierungsspur mit einer bestimmten Darstellung, wobei die zugewiesene Bezeichnung eine räumliche Position der Fahrstreifenmarkierungsspur in Bezug auf das Ego-Fahrzeug angibt.

9. Computerlesbares Speichermedium, das ein oder mehrere Programme speichert, die dazu konfiguriert sind, durch einen oder mehrere Prozessoren eines Verarbeitungssystems ausgeführt zu werden, wobei das eine oder die mehreren Programme Anweisungen zum Durchführen des Verfahrens nach einem der vorhergehenden Ansprüche umfassen.

10. System zum Bestimmen einer Darstellung einer oder mehrerer Fahrstreifenmarkierungsspuren, die sich entlang eines Straßenabschnitts erstrecken, wobei jede Fahrstreifenmarkierungsspur eine Vielzahl von Fahrstreifenmarkierungen umfasst, wobei das System eine Steuerschaltung umfasst, die zu Folgendem konfiguriert ist:

Erhalten, mittels eines Bewegungsmodells, eines Zustands eines Ego-Fahrzeugs, das auf dem Straßenabschnitt fährt;
Erhalten eines oder mehrerer Sensorerkennungscluster von einem Wahrnehmungsmodul des Ego-Fahrzeugs, wobei jeder Sensorerkennungscluster Erkennungen einer Teilmenge von Fahrstreifenmarkierungen der Vielzahl von Fahrstreifenmarkierungen umfasst, die in jeder Fahrstreifenmarkierungsspur umfasst sind;
Vorhersagen, basierend auf den erhaltenen Ego-Fahrzeug-Daten und der zuvor gebildeten einen oder mehreren Fahrstreifenmarkierungsspuren, einer geometrischen Darstellung der einen oder der mehreren Fahrstreifenmarkierungsspuren;
Bestimmen, für jede vorhergesagte Fahrstreifenmarkierungsspur, eines jeweiligen ersten Konfidenzwertes oder eines jeweiligen zweiten Konfidenzwertes, der sich von dem ersten Konfidenzwert unterscheidet;
Erstellen einer oder mehrerer Hypothesen für jede vorhergesagte Fahrstreifenmarkierungsspur, die den ersten Konfidenzwert aufweist;
Erstellen eines oder mehrerer Cluster-Spur-Paare für jede vorhergesagte Fahrstreifenmarkierungsspur, die den zweiten Konfidenzwert aufweist;
Durchführen einer Zuordnungsgewichtungsberechnung, mittels einer geschlossenen Funktion, für jede Hypothese und jedes Cluster-Spur-Paar, das für jede der vorhergesagten Fahrstreifenmarkierungsspuren erstellt wurde, die den ersten bzw. den zweiten Konfidenzwert aufweisen;
für jede vorhergesagte Fahrstreifenmarkierungsspur, die den zweiten Konfidenzwert aufweist:

Erstellen einer neuen Fahrstreifenmarkierungsspur, die den ersten Konfidenzwert aufweist, durch Kombinieren des einen oder der mehreren Cluster-Spur-Paare unter Verwendung der berechneten Zuordnungsgewichtungen des einen oder der mehreren Cluster-Spur-Paare;
Erstellen einer neuen Spurhypothese für die neue Fahrstreifenmarkierungsspur; and
Berechnen einer Zuordnungsgewichtung für die neue Spurhypothese, die für die neue Fahrstreifenmarkierungsspur mittels der geschlossenen Funktion erstellt wird;

für sämtliche Fahrstreifenmarkierungsspuren, welche die vorhergesagten Fahrstreifenmarkierungsspuren und die neuen Fahrstreifenmarkierungsspuren, die den ersten Konfidenzwert aufweisen, umfassen:

Bestimmen eines gemeinsamen Zuordnungswahrscheinlichkeitswertes für jede Hypothese-Spur-Kombination basierend auf der berechneten Zuordnungsgewichtung dieser Hypothese für deren entsprechende Fahrstreifenmarkierungsspur, wobei der bestimmte gemeinsame Zuordnungswahrscheinlichkeitswert für jede Hypothese-Spur-Kombination eine Wahrscheinlichkeit angibt, dass diese Hypothese zu dieser spezifischen Fahrstreifenmarkierungsspur gehört;

Auswählen einer oder mehrerer erstellter Hypothesen, deren gemeinsame Zuordnungswahrscheinlichkeiten der Hypothese-Spur-Kombination einen gemeinsamen Wahrscheinlichkeitsschwellenwert überschreiten;

Aktualisieren jeder Fahrstreifenmarkierungsspur mit jeder der einen oder der mehreren ausgewählten Hypothesen dieser Fahrstreifenmarkierungsspur, um einen aktualisierten Zustand oder mehrere aktualisierte Zustände dieser Fahrstreifenmarkierungsspur durch Aktualisieren mindestens eines Parameters eines Gaußsche Zufallsvektors zu erstellen, der diese vorhergesagte Fahrstreifenmarkierungsspur darstellt, mit dem einen oder den mehreren Sensorerkennungsclustern, die in jeder ausgewählten Hypothese dieser Fahrstreifenmarkierungsspur umfasst sind, wobei der Gaußsche Zufallsvektor durch einen Mittelwertvektor und eine Kovarianzmatrix parametrisiert ist;

Kombinieren sämtlicher aktualisierter Zustände jeder Fahrstreifenmarkierungsspur durch Kombinieren einer berechneten aktualisierten Existenzwahrscheinlichkeit, berechneter aktualisierter Mittelwertvektoren und berechneter aktualisierter Kovarianzmatrizes der einen oder der mehreren ausgewählten Hypothesen, um einen Einzelhypothesen-Zustand dieser Fahrstreifenmarkierungsspur zu erhalten;

wobei die Verarbeitungsschaltung ferner zu Folgendem konfiguriert ist:

Zuweisen des Einzelhypothesen-Zustands jeder Fahrstreifenmarkierungsspur zu dieser Fahrstreifenmarkierungsspur, um die Darstellung jeder Fahrstreifenmarkierungsspur zu bestimmen, die sich entlang des Straßenabschnitts erstreckt.

**11.** System nach Anspruch 10, wobei die Steuerschaltung für eine gegebene vorhergesagte Fahrstreifenmarkierungsspur zu Folgendem konfiguriert ist:
Bestimmen, für jede Erkennung, die in jedem Erkennungscluster umfasst ist, wenn eine Wahrscheinlichkeit dieser Erkennung einen vorbestimmten Gate-Schwellenwert überschreitet, dass es sich bei der Erkennung um eine annehmbare Erkennung für die gegebene vorhergesagte Fahrstreifenmarkierungsspur handelt.

**12.** System nach einem der Ansprüche 10 oder 11, wobei das Bewegungsmodell auf einem beliebigen von Ego-Fahrzeug-Daten, die ein beliebiges von einer Geschwindigkeit und einem Kurs des Ego-Fahrzeugs umfassen, und einem Random-Walk-Prozessmodell, das einen Zustand des Ego-Fahrzeugs auf dem Straßenabschnitt angibt, basiert.

**13.** System nach einem der Ansprüche 10 - 12, wobei die Steuerschaltung ferner zu Folgendem konfiguriert ist:
Zuweisen einer Fahrstreifenbezeichnung zu jeder Fahrstreifenmarkierungsspur mit einer bestimmten Darstellung, wobei die zugewiesene Bezeichnung eine räumliche Position der Fahrstreifenmarkierungsspur in Bezug auf das Ego-Fahrzeug angibt.

**14.** Fahrzeug, umfassend:

ein automatisiertes Fahrsystem, ADS;
ein Wahrnehmungsmodul, das eine oder mehrere Bordsensoren zum Überwachen einer umliegenden Umgebung des Fahrzeugs umfasst; und
ein System nach einem der Ansprüche 10 - 13.

## Revendications

**1.** Procédé de détermination d'une représentation d'une ou plusieurs pistes de marquage de voie s'étendant le long d'une portion de route, chaque piste de marquage de voie comprenant une pluralité de marqueurs de voie, le procédé comprenant :

l'obtention, au moyen d'un modèle de mouvement, d'un état d'un véhicule soumis à l'essai circulant sur la portion de route ;

l'obtention d'un ou plusieurs groupes de détection de capteur à partir d'un module de perception du véhicule soumis à l'essai, chaque groupe de détection de capteur comprenant des détections d'un sous-ensemble de marqueurs de voie de la pluralité de marqueurs de voie compris dans chaque piste de marquage de voie ;

la prédiction, sur la base de l'état obtenu du véhicule soumis à l'essai et d'une ou plusieurs pistes de marquage de voie formées précédemment, d'une représentation géométrique de l'une ou plusieurs pistes de marquage de voie ;

la détermination pour chaque piste de marquage de voie prédite, d'une première valeur de confiance respective ou d'une seconde valeur de confiance respective différente de la première valeur de confiance ;

la création d'une ou plusieurs hypothèses pour chaque piste de marquage de voie prédite ayant la première valeur de confiance ;

la création d'une ou plusieurs paires groupe-piste pour chaque piste de marquage de voie prédite ayant la seconde valeur de confiance ;

la réalisation d'un calcul de pondération d'association, au moyen d'une fonction à forme fermée, pour chaque hypothèse et chaque paire groupe-piste créée pour chacune des pistes de marquage de voie prédites ayant respectivement la première ou la seconde valeur de confiance ;

pour chaque piste de marquage de voie prédite ayant la seconde valeur de confiance :

la création d'une nouvelle piste de marquage de voie ayant la première valeur de confiance en combinant l'une ou plusieurs paires groupe-piste en utilisant les pondérations d'association calculées de l'une ou plusieurs paires groupe-piste ;

la création d'une hypothèse de nouvelle piste pour la nouvelle piste de marquage de voie ; et

le calcul d'une pondération d'association pour l'hypothèse de nouvelle piste créée pour la nouvelle piste de marquage de voie au moyen de la fonction à forme fermée ;

pour toutes les pistes de marquage de voie comprenant les pistes de marquage de voie prédites et les nouvelles pistes de marquage de voie ayant la première valeur de confiance :

la détermination d'une valeur de probabilité d'association conjointe pour chaque combinaison hypothèse-piste sur la base de la pondération d'association calculée de cette hypothèse créée pour sa piste de marquage de voie correspondante, la valeur de probabilité d'association conjointe déterminée pour chaque combinaison hypothèse-piste étant indicative d'une probabilité que cette hypothèse appartienne à cette piste de marquage de voie spécifique ;

la sélection d'une ou plusieurs hypothèses créées dont les probabilités d'association conjointes de combinaison hypothèse-piste dépassent une valeur de seuil de probabilité conjointe ;

la mise à jour de chaque piste de marquage de voie avec chacune de l'une ou plusieurs hypothèses sélectionnées de cette piste de marquage de voie pour créer un ou plusieurs états mis à jour de cette piste de marquage de voie en mettant à jour au moins un paramètre d'un vecteur aléatoire gaussien, représentant cette piste de marquage de voie prédite avec l'un ou plusieurs groupes de détection de capteur compris dans chaque hypothèse sélectionnée de cette piste de marquage de voie, le vecteur aléatoire gaussien étant paramétré par un vecteur moyen et une matrice de covariance ;

la combinaison de tous les états mis à jour de chaque piste de marquage de voie, en combinant une probabilité d'existence mise à jour calculée, des vecteurs moyens mis à jour calculés et des matrices de covariance mises à jour calculées de l'une ou plusieurs hypothèses sélectionnées, pour obtenir un état à hypothèse unique de cette piste de marquage de voie ;

dans lequel le procédé comprend en outre :

l'attribution de l'état d'hypothèse unique de chaque piste de marquage de voie à cette piste de marquage de voie afin de déterminer la représentation de chaque piste de marquage de voie s'étendant le long de la portion de route.

2. Procédé selon la revendication 1, dans lequel pour une trajectoire de marquage de voie prédite donnée, le procédé comprend en outre :

la détermination pour chaque détection comprise dans chaque groupe de détection, si une probabilité de cette détection dépasse une valeur de seuil prédéterminée, que la détection est une détection acceptable pour la trajectoire de marquage de voie prédite donnée.

3. Procédé selon l'une quelconque des revendications 1 ou 2, dans lequel le modèle de mouvement est basé sur l'un quelconque parmi des données du véhicule soumis à l'essai comprenant l'un quelconque parmi une vitesse et un cap du véhicule soumis à l'essai et un modèle de processus de marche aléatoire indiquant un état du véhicule soumis à l'essai sur la portion de route.

4. Procédé selon l'une quelconque des revendications 1 à 3, dans lequel l'une ou plusieurs hypothèses créées pour une piste de marquage de voie prédite donnée ayant la première valeur de confiance comprennent l'une quelconque parmi une hypothèse de détection erronée, une hypothèse pour chaque groupe de détection et une hypothèse pour chacun d'au moins une combinaison de l'un ou plusieurs groupes de détection.

5. Procédé selon l'une quelconque des revendications 1 à 4, dans lequel la détermination de la représentation de chaque piste de marquage de voie s'étendant le long de la portion de route comprend :
la formation de la représentation de chaque piste de marquage de voie en attribuant l'état d'hypothèse unique de chaque piste de marquage de voie à cette piste de marquage de voie.

6. Procédé selon l'une quelconque des revendications précédentes, dans lequel la mise à jour de chaque piste de marquage de voie avec chacune des hypothèses sélectionnées de cette piste de marquage de voie pour créer un ou plusieurs états mis à jour de cette piste de marquage de voie comprend :
la mise à jour de chaque piste de marquage de voie prédite ayant la première valeur de confiance avec chacune des hypothèses sélectionnées de cette piste de marquage de voie prédite et la mise à jour de chaque nouvelle piste de marquage de voie ayant la première valeur de confiance créée sur la base des pistes de marquage de voie prédites ayant la seconde valeur de confiance avec l'hypothèse de nouvelle piste de cette nouvelle piste de marquage de voie.

7. Procédé selon la revendication 4, dans lequel le calcul du poids d'association de chaque hypothèse pour une combinaison d'un ou plusieurs groupes de détection comprend :
le calcul du poids d'association en combinant les poids d'association calculés des hypothèses pour chaque groupe de détection unique compris dans au moins une combinaison d'un ou plusieurs groupes de détection.

8. Procédé selon l'une quelconque des revendications précédentes, dans lequel le procédé comprend en outre :
l'attribution d'un marqueur de voie à chaque piste de marquage de voie avec une représentation déterminée, le marqueur attribué étant indicatif d'une position spatiale de la piste de marquage de voie par rapport au véhicule soumis à l'essai.

9. Support de stockage lisible par ordinateur stockant un ou plusieurs programmes configurés pour être exécutés par un ou plusieurs processeurs d'un système de traitement, l'un ou plusieurs programmes comprenant des instructions pour exécuter le procédé selon l'une quelconque des revendications précédentes.

10. Système permettant de déterminer une représentation d'une ou de plusieurs pistes de marquage de voie s'étendant le long d'une portion de route, chaque piste de marquage de voie comprenant une pluralité de marqueurs de voie, le système comprenant un circuit de commande configuré pour :

obtenir, au moyen d'un modèle de mouvement, un état d'un véhicule soumis à l'essai circulant sur la portion de route ;
obtenir un ou plusieurs groupes de détection de capteur à partir d'un module de perception du véhicule soumis à l'essai, chaque groupe de détection de capteur comprenant des détections d'un sous-ensemble de marqueurs de voie de la pluralité de marqueurs de voie compris dans chaque piste de marquage de voie ;
prédire, sur la base des données de véhicule soumis à l'essai obtenues et d'une ou plusieurs pistes de marquage de voie formées précédemment, une représentation géométrique de l'une ou plusieurs pistes de marquage de voie ;
déterminer pour chaque piste de marquage de voie prédite, une première valeur de confiance respective ou une seconde valeur de confiance respective différente de la première valeur de confiance ;
créer une ou plusieurs hypothèses pour chaque piste de marquage de voie prédite ayant la première valeur de confiance ;
créer une ou plusieurs paires groupe-piste pour chaque piste de marquage de voie prédite ayant la seconde valeur de confiance ;
effectuer un calcul de pondération d'association, au moyen d'une fonction à forme fermée, pour chaque hypothèse et chaque paire groupe-piste créée pour chacune des pistes de marquage de voie prédites ayant respectivement la première ou la seconde valeur de confiance ;
pour chaque piste de marquage de voie prédite ayant la seconde valeur de confiance :

créer une nouvelle piste de marquage de voie ayant la première valeur de confiance en combinant l'une ou plusieurs paires groupe-piste en utilisant les pondérations d'association calculées de l'une ou plusieurs paires groupe-piste ;

créer une hypothèse de nouvelle piste pour la nouvelle piste de marquage de voie ; et

calculer une pondération d'association pour l'hypothèse de nouvelle piste créée pour la nouvelle piste de marquage de voie au moyen de la fonction à forme fermée ;

pour toutes les pistes de marquage de voie comprenant les pistes de marquage de voie prédites et les nouvelles pistes de marquage de voie ayant la première valeur de confiance :

déterminer une valeur de probabilité d'association conjointe pour chaque combinaison hypothèse-piste sur la base de la pondération d'association calculée de cette hypothèse pour sa piste de marquage de voie correspondante, la valeur de probabilité d'association conjointe déterminée pour chaque combinaison hypothèse-piste étant indicative d'une probabilité que cette hypothèse appartienne à cette piste de marquage de voie spécifique ;

sélectionner une ou plusieurs hypothèses créées dont les probabilités d'association conjointes de combinaison hypothèse-piste dépassent une valeur de seuil de probabilité conjointe ;

mettre à jour chaque piste de marquage de voie avec chacune de l'une ou plusieurs hypothèses sélectionnées de cette piste de marquage de voie pour créer un ou plusieurs états mis à jour de cette piste de marquage de voie en mettant à jour au moins un paramètre d'un vecteur aléatoire gaussien, représentant cette piste de marquage de voie prédite avec l'un ou plusieurs groupes de détection de capteur compris dans chaque hypothèse sélectionnée de cette piste de marquage de voie, le vecteur aléatoire gaussien étant paramétré par un vecteur moyen et une matrice de covariance ;

combiner tous les états mis à jour de chaque piste de marquage de voie, en combinant une probabilité d'existence mise à jour calculée, des vecteurs moyens mis à jour calculés et des matrices de covariance mises à jour calculées de l'une ou plusieurs hypothèses sélectionnées, pour obtenir un état à hypothèse unique de cette piste de marquage de voie ;

dans lequel le circuit de traitement est en outre configuré pour :

attribuer l'état d'hypothèse unique de chaque piste de marquage de voie à cette piste de marquage de voie afin de déterminer la représentation de chaque piste de marquage de voie s'étendant le long de la portion de route.

11. Système selon la revendication 10, dans lequel le circuit de commande est configuré pour, pour une piste de marquage de voie prédite donnée :

déterminer pour chaque détection comprise dans chaque groupe de détection, si une probabilité de cette détection dépasse une valeur de seuil prédéterminée, que la détection est une détection acceptable pour la piste de marquage de voie prédite donnée.

12. Système selon l'une quelconque des revendications 10 ou 11, dans lequel le modèle de mouvement est basé sur l'une quelconque des données de véhicule soumis à l'essai comprenant l'un quelconque parmi une vitesse et un cap du véhicule soumis à l'essai et un modèle de processus de marche aléatoire indiquant un état du véhicule soumis à l'essai sur la portion de route.

13. Système selon l'une quelconque des revendications 10 à 12, dans lequel le circuit de commande est en outre configuré pour :

attribuer un marqueur de voie à chaque piste de marquage de voie avec une représentation déterminée, le marqueur attribué indiquant une position spatiale de la piste de marquage de voie par rapport au véhicule soumis à l'essai.

14. Véhicule comprenant :

un système de conduite automatisé, ADS ;

un module de perception comprenant un ou plusieurs capteurs embarqués pour surveiller un environnement environnant du véhicule ; et

un système selon l'une quelconque des revendications 10 à 13.

Fig. 1a

Fig. 1b

Lane tracker 300

Fig. 1c

EP 4 261 738 B1

Fig. 2

*Fig. 3*

Table 3-1

| Hypothesis | H1 | H2 | H3 | H4 | H5 | H6 | H7 | H8 |
|---|---|---|---|---|---|---|---|---|
| Detection cluster | Miss detection | 100a | 100b | 100f | (100a, 100b) | (100a, 100f) | (100b, 100f) | (100a, 100b, 100f) |

401

Obtain ego vehicle data

403

Obtain
one or more sensor
detection clusters

400

Predict a geometrical representation of one or more lane-marker tracks    405

Determine a confidence value for each predicted lane-marker track    407

Outlier rejection    433

Create one or more hypotheses for each predicted lane-marker track having the first confidence value    409

Create one or more cluster-track pairs for each predicted lane-marker track having the second confidence value    411

Perform a closed-form association weight calculation    413

Fig. 4a

413

Perform a closed-form association weight calculation

400

**For all lane-marker tracks**

415

Determine joint association probability value for each hypothesis-track combination based on the calculated association weights

417

Select one or more created hypotheses whose hypothesis-track combination joint association probabilities exceed a joint probability threshold value

419

Update each lane-marker track with each of the selected one or more hypotheses of that lane-marker track

421

Combine all Updated states of each lane-marker track to obtain a single-hypothesis state of that lane-marker track

**For each predicted lane-marker track having the second confidence value**

423

Create a new lane-marker track having the first confidence value by combining the one or more cluster-track pairs

425

Create a new-track hypothesis for the new lane-marker track

427

Calculate an association weight for the new-track hypothesis created for the new lane-marker track

431

Assign the single-hypothesis state to each track

*Fig. 4b*

24

200a-t1

100a

242

1

241

100b

## Fig. 5a

Iteration phase 1

200a-t1

201a  201a

H1  H2  H3  H4

100a  100b

| Hypothes is | H1 | H2 | H3 | H4 |
|---|---|---|---|---|
| Detection cluster | Miss detection | 100 a | 100b | (100a, 100b) |

Table 5-1

24

200a-T1

100a

242

1

100c  100d

201a-T2

100b

100f

241

241

## Fig. 5b

Iteration phase 1

200a-t1

201a  201a

H1  H2  H3  H4

X  X  X

100a  100b

X

200a-T1

201a-T2

Fig. 5c

Fig. 5d

Fig. 6

EP 4 261 738 B1

**EP 4 261 738 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHAO KUN et al.** A novel multi-hypothesis tracking framework for lane recognition. *17TH International Conference on Information Fusion (FUSION), International Society of Information Fusion,* 07 July 2014, 1-8